(19) Europäisches Patentamt
European Patent Office
Office européen des brevets

(11) EP 4 148 009 A1

(12) **EUROPEAN PATENT APPLICATION**
published in accordance with Art. 153(4) EPC

(43) Date of publication:
**15.03.2023 Bulletin 2023/11**

(21) Application number: **21833014.0**

(22) Date of filing: **17.06.2021**

(51) International Patent Classification (IPC):
**B65G 61/00** (2006.01)   **G08G 1/00** (2006.01)
**G01C 21/34** (2006.01)   **G06Q 10/04** (2012.01)
**G06Q 10/08** (2012.01)   **G16Y 10/40** (2020.01)
**G16Y 40/60** (2020.01)

(52) Cooperative Patent Classification (CPC):
**B65G 61/00; G01C 21/34; G06Q 10/04;
G06Q 10/08; G08G 1/00; G16Y 10/40; G16Y 40/60**

(86) International application number:
**PCT/JP2021/023015**

(87) International publication number:
**WO 2022/004407 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.06.2020 JP 2020111812**

(71) Applicant: **Panasonic Intellectual Property
Management Co., Ltd.
Osaka-shi, Osaka 540-6207 (JP)**

(72) Inventor: **YAMAGUCHI Koichiro
Osaka-shi, Osaka 540-6207 (JP)**

(74) Representative: **Eisenführ Speiser
Patentanwälte Rechtsanwälte PartGmbB
Postfach 31 02 60
80102 München (DE)**

(54) **DELIVERY PLAN GENERATION DEVICE AND DELIVERY PLAN GENERATION METHOD**

(57)   A delivery plan generation device includes: a processor; a communication unit configured to acquire delivery range information indicating a delivery range of an article; and a memory configured to store past congestion information and road feature information indicating characteristics of roads corresponding to the delivery range information. The processor acquires road network information indicating a connection relationship between the roads, acquires learning information generated based on a travel history of a delivery vehicle that delivers an article, and past congestion information and road feature information on the roads corresponding to the travel history, acquires congestion information on the roads for a scheduled delivery time, calculates road costs for the roads based on the road feature information, the congestion information for the scheduled delivery time, and the learning information, and generates a delivery plan of the article by using the road network information and the road costs.

[FIG. 4]

**Description**

TECHNICAL FIELD

The present disclosure relates to a delivery plan generation device and a delivery plan generation method.

BACKGROUND ART

Patent Literature 1 discloses a vehicle navigation device that learns, based on a current position of a vehicle, a route along which the vehicle traveled, learns congestion information generated along a route of a frequently traveled road, compares current congestion information acquired from an outside of the vehicle on the frequently traveled road with congestion information that was learned in the past, and selects, based on a comparison result, whether to search for a route bypassing a congestion occurrence place.

Citation List

Patent Literature

PTL 1: Japanese Patent Unexamined Publication No. 2005-127942

SUMMARY OF THE INVENTION

The present disclosure is devised in view of the above-described situation in related art. An object of the present disclosure is to provide a delivery plan generation device and a delivery plan generation method that efficiently formulate a package delivery plan in consideration of situations of roads to a package delivery destination that are different from those in the past at a scheduled delivery time.

The present disclosure provides a delivery plan generation device including: a processor; a communication unit configured to acquire delivery range information indicating a delivery range of an article; and a memory configured to store past congestion information and road feature information indicating characteristics of roads corresponding to the delivery range information, in which the processor acquires road network information indicating a connection relationship between the roads, acquires learning information generated based on a travel history of a delivery vehicle that delivers the article, and the past congestion information and the road feature information on the roads corresponding to the travel history, acquires congestion information on the roads for a scheduled delivery time, calculates road costs for the roads based on the road feature information, the congestion information for the scheduled delivery time, and the learning information, and generates a delivery plan of the article by using the road network information and the road costs.

The present disclosure provides a delivery plan generation method including: acquiring delivery range information indicating a delivery range of an article; acquiring past congestion information and road feature information indicating characteristics of roads corresponding to the delivery range information; acquiring road network information indicating a connection relationship between the roads; acquiring learning information corresponding to a travel history of a delivery vehicle that delivers the article, and the past congestion information and the road feature information on the roads corresponding to the travel history; acquiring congestion information on the roads for a scheduled delivery time; calculating road costs for the roads based on the road feature information, the congestion information for the scheduled delivery time, and the learning information; and generating a delivery plan of the article by using the road network information and the road costs.

According to the present disclosure, it is possible to efficiently formulate a package delivery plan in consideration of situations of roads to a package delivery destination that are different from those in the past at a scheduled delivery time.

BRIEF DESCRIPTION OF DRAWINGS

[FIG. 1] FIG. 1 is a block diagram showing in detail an example of an internal configuration of a road learning model generation device according to a first embodiment.
[FIG. 2] FIG. 2 is a diagram showing an example of a travel history of a delivery route from base S to delivery destination D1 stored in travel history DB.
[FIG. 3] FIG. 3 is a flowchart showing in detail an example of a procedure for generating a road learning model by the road learning model generation device according to the first embodiment.
[FIG. 4] FIG. 4 is a diagram showing an example of determining a delivery route during delivery plan generation, using a learning result and a delivery route during learning of delivery range AR1 from base T to delivery destination E1.

[FIG. 5] FIG. 5 is a block diagram showing in detail an example of an internal configuration of a delivery plan generation device according to a second embodiment.

[FIG. 6A] FIG. 6A is a table showing an example of distances of roads between delivery destinations before learning.

[FIG. 6B] FIG. 6B is a table showing an example of delivery costs corresponding to the roads between the delivery destinations after learning.

[FIG. 7] FIG. 7 is a diagram showing an example of distances of roads from delivery destination D1 to delivery destination D3 before learning and delivery costs corresponding to the roads after learning.

[FIG. 8] FIG. 8 is a flowchart showing in detail an example of a procedure for generating a delivery plan by the delivery plan generation device according to the second embodiment.

[FIG. 9] FIG. 9 is a flowchart showing in detail an example of a procedure for calculating a delivery plan in step S17 in FIG. 8.

[FIG. 10] FIG. 10 is a diagram showing an example of three types of improvement methods used in step S22 in FIG. 8.

[FIG. 11] FIG. 11 is a block diagram showing in detail an example of an internal configuration of a delivery plan generation device according to a modification of the second embodiment.

[FIG. 12] FIG. 12 is a diagram showing an example of determining a delivery route during delivery plan generation in an unlearned region, using a learning result in a learned region.

DESCRIPTION OF EMBODIMENTS

(Background of Present Disclosure)

A vehicle navigation device of Patent Literature 1 causes a user to select whether to search for a route for bypassing only when a place where current congestion occurs along a frequently traveled road is different from a place indicated by congestion information learned in the past. On the other hand, unlike the car navigation of Patent Literature 1, in a case of considering a delivery route that a delivery vehicle takes when delivering a package, there is a problem that it is difficult to efficiently generate an appropriate delivery route having a reduced burden on a driver of the delivery vehicle even when a configuration of Patent Literature 1 is used. For example, delivery is not simply a matter of bypassing congestion and arriving early. It is necessary to determine whether to bypass the congestion and, , whether the route is suitable for delivery if it is determined to bypass the congestion.

In delivery of a package, it is considered that a skilled driver (i.e., a veteran driver with considerable experience) is accustomed to delivering a package efficiently in light of a shape and a congestion degree of a road to pass. However, in Patent Literature 1, it is not considered to use and reflect a travel history of a road along which the skilled driver traveled in generation of a package delivery plan. Therefore, in the delivery of a package, it is difficult to formulate an appropriate package delivery plan in accordance with a situation of a road to a delivery destination.

Therefore, in the following embodiments, an example of a delivery plan generation device and a delivery plan generation method will be described that, in delivery of a package, effectively assist a formulation of an optimum package delivery plan in accordance with situations of roads to a delivery destination that are different between in the past and at a scheduled delivery time, and reduce a burden on a driver who delivers the package.

Hereinafter, embodiments specifically disclosing a road learning model generation device, a road learning model generation method, a delivery plan generation device, and a delivery plan generation method according to the present disclosure will be described in detail with reference to the drawings appropriately. It is noted that, unnecessary description in detail may be omitted. For example, detailed description of well-known matters and redundant description of substantially the same configuration may be omitted. This is to avoid unnecessary redundancy of the following description and to facilitate understanding of those skilled in the art. The accompanying drawings and the following description are provided for those skilled in the art to fully understand the present disclosure, and are not intended to limit the subject matter described in claims.

A road learning model generation device and a delivery plan generation device according to the embodiments may be implemented by the same device or may be implemented by separate devices. In the case of being implemented by the same device (e.g., a personal computer or a server device), the device is embodied as the road learning model generation device by executing processes constituting the road learning model generation method. Similarly, the device is embodied as the delivery plan generation device by executing processes constituting the delivery plan generation method at a timing different from the execution of the road learning model generation method described above.

(First Embodiment: Road Learning Model Generation Device)

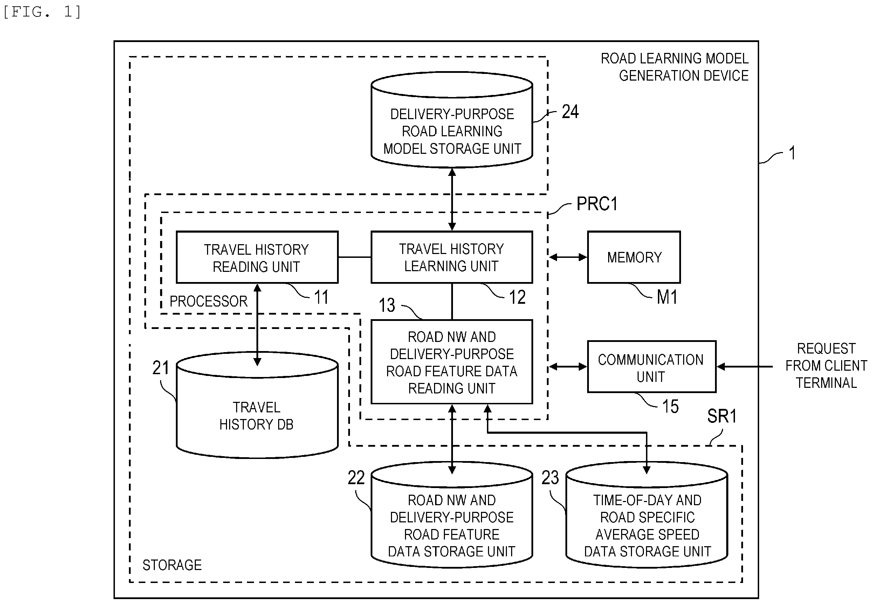

FIG. 1 is a block diagram showing in detail an example of an internal configuration of road learning model generation device 1 according to a first embodiment. Road learning model generation device 1 is implemented by a computer such as a personal computer (PC) or a server device, and mainly includes memory M1, processor PRC1, storage SR1, and communication unit 15.

Memory M1 includes a random access memory (RAM) and a read only memory (ROM). Memory M1 temporarily stores a program necessary for executing an operation of road learning model generation device 1, and further, data or information generated during the operation. The RAM is, for example, a work memory used during the operation of processor PRC1. The ROM stores, for example, a program and data for controlling processor PRC1 in advance.

Processor PRC1 includes, for example, a central processing unit (CPU), a digital signal processor (DSP), a graphical processing unit (GPU), or a field programmable gate array (FPGA). Processor PRC1 includes travel history reading unit 11, travel history learning unit 12, and road NW and delivery-purpose road feature data reading unit 13. NW is described as an abbreviation of a network. In other words, these units (i.e., travel history reading unit 11, travel history learning unit 12, road NW and delivery-purpose road feature data reading unit 13) are implemented by processor PRC1, by processor PRC1 reading programs and pieces of data corresponding to the respective units.

Storage SR1 (an example of a memory) includes, for example, a flash memory, a hard disk drive (HDD), or a solid state drive (SSD). Storage SR1 includes travel history DB 21, road NW and delivery-purpose road feature data storage unit 22, time-of-day and road specific average speed data storage unit 23, and delivery-purpose road learning model storage unit 24. DB is described as an abbreviation of a database.

Communication unit 15 includes a communication interface circuit that controls communication between road learning model generation device 1 and an external device (e.g., a client terminal used by a user) connected to communication unit 15 via a network (e.g., a wireless local area network (LAN)). The communication between communication unit 15 and the client terminal is not limited to the wireless LAN, and the client terminal may be connected to communication unit 15 via a wired LAN, or the client terminal may be directly connected to communication unit 15 via an interface such as serial communication or parallel communication. Communication unit 15 transmits and receives data to and from, for example, the client terminal described above (for example, receives delivery range data indicating an area of a delivery range of a package transmitted from the client terminal).

Next, each functional configuration implemented by processor PRC1 and details of various databases or storage units provided in storage SR1 will be described.

Travel history reading unit 11 reads travel history data registered in travel history DB 21. The travel history data includes, for example, a history of identification information for identifying one or more roads along which a delivery vehicle (e.g., a truck) with a skilled driver (i.e., a veteran driver who accumulated considerable experience for a certain number of years) traveled when delivering a package from a travel starting point to a target delivery destination, and an average speed when traveling on a road corresponding to the identification information. Specifically, the travel history data is a set of pairs of a road ID (an example of the road identification information) for identifying one or more roads that constitute a delivery route along which a delivery vehicle with a skilled driver traveled when delivering a package to a target delivery destination and an average speed corresponding to the road ID. The details of the road ID will be described later. The average speed is calculated, for each road ID, by dividing a distance of the road by a traveling time of the delivery vehicle. When the average speed is not included in the travel history data described above, processor PRC1 may acquire an average speed of the road ID at the relevant time by using time-of-day and road specific average speed data that is stored separately externally or in time-of-day and road specific average speed data storage unit 23 (described later) held by road learning model generation device 1. As the average speed, information of another format (item) may be used as long as the information indicates a congestion degree of the road. For example, a flag in units of 10 km/h (e.g., a flag indicating 10 km/h to 20 km/h) may be used, an increase-decrease rate with respect to a speed limit (e.g., 60% when a speed limit is 50 km/h and an actual speed is 30 km/h, and 120% when a speed limit is 50 km/h and an actual speed is 60 km/h) may be used, or the number of vehicles passing through the road within a unit time (e.g., one hour) may be used. The congestion degree of the road is not limited to the number of vehicles passing through the road, and the number of children walking or the number of vehicles parked on the road may be used as long as it represents the difficulty of passage of vehicles. In addition to the average speed, a type of a package may also be acquired as the travel history. This is because a vehicle speed at which the delivery vehicle can travel is different depending on the type or weight of the package. For example, in the case of a fragile package such as a fragile article, the average speed is considered to be low.

Road NW and delivery-purpose road feature data reading unit 13 reads, based on delivery range information from communication unit 15, road network data and feature data of each road (hereinafter referred to as "road feature data") corresponding to the delivery range information registered in road NW and delivery-purpose road feature data storage unit 22 (described later). The road network data is so-called road map data (so-called map data), and is data indicating a connection relationship between roads on a road map and other roads connected to the roads. The road network data and the road feature data may be updated when a road is newly constructed or repaired. In this case, contents of road NW and delivery-purpose road feature data storage unit 22 are updated together.

Travel history learning unit 12 learns the travel history data used for delivery within the delivery range, based on the delivery range data received by communication unit 15, travel history data read by travel history reading unit 11, and the road network data and the road feature data read by road NW and delivery-purpose road feature data reading unit 13. Travel history learning unit 12 generates, as an output from this learning, a road learning model corresponding to the delivery range of the package. In the present specification, a calculation method in a case where the road learning model is a function (a first calculation method) and a calculation method in a case where the road learning model is a coefficient (a second calculation method) will be exemplified as a calculation method of a road cost (described later) using the road learning model.

First calculation method: a case where road learning model (example of learning information) is function

The road learning model as an example of the learning information is generated by, for example, inverse reinforcement learning (IRL) of artificial intelligents (AI) implementing travel history learning unit 12. The road learning model inputs, for example, an average speed, for each road ID, included in the travel history data and road feature data (described later) corresponding to each road ID, and calculates a reward of a road corresponding to the road ID. A road cost (described later) is calculated based on the reward. The higher the reward is, the more frequently the road is traveled (when the travel history data is from a skilled driver, it indicates that the higher the reward is, the more frequently the road is traveled by the skilled driver). That is, in the first calculation method, the road cost corresponds to a function output value (i.e., a reciprocal (i.e., 1/(reward of inverse reinforcement learning)) of the output (i.e., the reward) obtained in the inverse reinforcement learning) when the road learning model inputs the road feature data and the average speed for each road ID. For example, when the function of the road learning model is defined as f(x, y, z), the road cost is obtained as 1/f(x, y, z), i.e., 1/f(first road feature data, second road feature data, average speed). In this formula, the number of pieces of road feature data to be input is not limited to two, and may be one or three or more.

Here, the inverse reinforcement learning (IRL) is, for example, to estimate what kind of action is good based on an action taken by a skilled person. By quantitatively obtaining this goodness, it is possible to generate an action that closely resembles an action of the skilled person. For example, when a delivery person (driver) drives a delivery vehicle in order to deliver a plurality of packages, it is assumed that which delivery route should be taken differs between a skilled driver and a non-skilled driver (i.e., an inexperienced general driver).

Therefore, road learning model generation device 1 according to the first embodiment can obtain an index (e.g., a road cost) for determining a delivery plan appropriate for delivery by using the inverse reinforcement learning to determine the goodness of the delivery route (in other words, the travel history data) selected by a skilled driver, and can assist in preparing a delivery plan that enables smooth delivery like the delivery by the skilled driver. Therefore, the inverse reinforcement learning is performed by, for example, machine learning using the travel history data of the skilled driver as training data. The machine learning may be performed in real time while the skilled driver is traveling, or may be performed after the traveling of the skilled driver. As the travel history data of the skilled driver, not only travel history data of one skilled driver but also travel history data of a plurality of skilled drivers may be used as an input target.

Second calculation method: a case where road learning model (example of learning information) is coefficient

Similarly, the road learning model as an example of the learning information is generated by, for example, machine learning of artificial intelligents (AI) implementing travel history learning unit 12. The road learning model is, for example, a set of coefficients, by which the road feature data and the average speed are multiplied respectively, used to calculate a road cost (described later) corresponding to the road ID by taking the average speed for each road ID included in the travel history data and the road feature data (described later) corresponding to each road ID as input. In this case, the road cost can be calculated, for example, as follows. Specifically, the road cost can be calculated by adding those obtained by multiplying the average speed and elements (described later in detail) constituting the road feature data by different coefficients (e.g., a "first coefficient", a "second coefficient", and a "third coefficient" described later) constituting the corresponding road learning model. That is, road cost = "first coefficient × first road feature data" + "second coefficient × second road feature data" + "third coefficient × average speed". A set of the coefficients (i.e., the first coefficient, the second coefficient, and the third coefficient in the example described above) is the road learning model.

When acquiring the travel history data, the type of a package to be delivered (e.g., information indicating whether the package is a fragile article, or information indicating a rank for each weight) may also be used as a learning element during learning and an item during calculating the road cost.

Travel history learning unit 12 may generate a road learning model (e.g., a coefficient to be multiplied by road feature data, which is used during calculating a road cost) by machine learning without using AI. In this case, delivery-purpose road cost calculation unit 31 (described later) determines the road cost using the road learning model. For example, travel history learning unit 12 learns travel history data of a road along which the skilled driver actually traveled so as to reduce a road cost of a road along which the skilled driver frequently travels. That is, delivery-purpose road cost calculation unit 31 may calculate a road cost, which decreases as the number of times of passing through a target road increases, according to Formula (1), based on distance information (i.e., an edge distance between two nodes constituting a road indicated by the road ID) that is one piece of the road feature data. Travel history learning unit 12 learns "(1 - total number of travels on target road/total number of travels on entire road)" used in Formula (1) to be the road learning model (the coefficient).

$$\text{Road cost} = \text{distance information} \times (1 - \text{total number of travels on target}$$

$$\text{road/total number of travels on entire road}) \,...(1)$$

Here, the total number of travels on target road and the total number of travels on entire road can be acquired by travel history learning unit 12 from the travel history data stored in travel history DB 21. The total number of travels on target road is a vector value, is treated as a separate count value when the delivery vehicle passes through the same target road in different directions, and is treated as the same count value only when the delivery vehicle passes through the same target road in the same direction. For example, the number of times the delivery vehicle traveled the same target road from north to south and the number of times the delivery vehicle traveled the same target road from south to north are different count values, and are not added and used. In the following description, the road learning model may be either the function or the coefficient described above.

Travel history DB 21 stores travel history data of a delivery route along which one or more skilled drivers traveled. Travel history DB 21 may also be provided in delivery plan generation device 30 according to a second embodiment described later. The delivery route used by the skilled driver is acquired by, for example, an in-vehicle device (e.g., a global navigation satellite system (GNSS) receiver, a car navigation system, or a digital tachograph) mounted on the delivery vehicle, and is stored in a memory card. After traveling, the skilled driver causes road learning model generation device 1 to read data of the delivery route stored in the memory card, and stores the data in travel history DB 21. Road learning model generation device 1 may perform wireless communication with the GNSS receiver mounted on the delivery vehicle with the skilled driver, sequentially acquire a current position of the delivery vehicle, acquire a delivery route during traveling in real time, and store the delivery route in travel history DB 21.

Road NW and delivery-purpose road feature data storage unit 22 stores the road network data (described above) including the road map and the road feature data of each road on the road map. The road feature data includes, for each road, a road ID, road distance information, road right and left turn information, road width information, road median strip information, road crossing main road information, road height difference information, and road congestion information (e.g., an average speed) during learning by travel history learning unit 12. The road feature data may further include image data indicating information on the number of children walking on the road during learning by travel history learning unit 12 or information on the number of children, and image data indicating information on the number of parked vehicles parked on the road during learning by travel history learning unit 12 or the number of parked vehicles. The road congestion information (e.g., an average speed) during learning by travel history learning unit 12, the information on the number of children walking on the road during learning by travel history learning unit 12, and the information on the number of parked vehicles parked on the road during learning by travel history learning unit 12 are information dynamically changing with respect to the characteristics of the road. On the other hand, the road distance information, the road right and left turn information, the road width information, the road median strip information, the road crossing main road information, and the road height difference information are static information (in other words, information that does not change) with respect to the characteristics of the road.

In the following description, the static information of the road feature data may include at least the distance information corresponding to the road ID, and may further include at least one of the right and left turn information, the width information, the median strip information, the crossing main road information, and the height difference information. The static information of the road feature data may include all of the distance information, the right and left turn information, the width information, the median strip information, the crossing main road information, and the height difference information, corresponding to the road ID.

The distance information represents a distance of the road specified by the road ID (in other words, when one road includes two nodes corresponding to both ends of the road and an edge between the two nodes, a distance of the edge). Therefore, the distance information is specifically represented by a numerical value indicating the distance of the road.

The right and left turn information is information representing whether the road specified by the road ID turns right or left, and specifically includes the presence or absence of right and left turns and the number of turns. In general, when there is a right turn or a left turn, a speed limit of the vehicle is set to be low and it is determined that a traveling time is long, and thus the road cost tends to be increased. Conversely, in the case of a straight road with no right turn or left turn, the speed limit of the vehicle may not be set to be low and it is determined that the traveling time is short, and thus the road cost is likely to be reduced. The right and left turn information may include information as to whether a right turn or a left turn is made from a road having an immediately preceding road ID toward a road having a target road ID.

The width information is information representing a width of the road specified by the road ID, and is specifically represented by a numerical value. The width of the road may be a distance from an end to the other end of the road in a width direction, or may be a distance for each lane in the width direction. In general, when the width of the road is small, it is determined that the traveling speed is low, and thus the road cost tends to be increased. Conversely, when the width of the road is large, it is determined that the traveling speed is high, and thus the road cost is likely to be reduced.

The median strip information represents the presence or absence of a median strip on the road specified by the road ID. In general, when there is a median strip, the flow of the vehicle is smooth and it is determined that the traveling speed is high, and thus the road cost tends to be reduced. Conversely, when there is no median strip, it is determined that the traveling speed is slow due to passing by oncoming vehicles, and thus the road cost is likely to be increased.

The crossing main road information represents whether a main road crosses the road specified by the road ID, specifically, the presence or absence of crossing of the main road. In general, when the main road crosses the road specified by the road ID, it is determined that the traffic volume is large, and thus the road cost tends to be increased. Conversely, when the main road does not cross the road specified by the road ID, it is determined that the traffic volume is small, and thus the road cost is likely to be reduced. The crossing main road information may include information indicating whether an end node of the road having the road ID is connected to the main road.

The height difference information represents the presence or absence of a height difference such as an uphill slope or a downhill slope on the road specified by the road ID. In general, when there is a height difference, it is determined that congestion is likely to occur, and thus the road cost tends to be increased. Conversely, when there is no height difference, the flow of the vehicle is smooth, and thus the road cost is likely to be reduced.

The congestion information is information indicating whether the road specified by the road ID is congested during learning by travel history learning unit 12, and may be quantitatively specified using a numerical value such as an average speed, or may be qualitatively specified by text data indicating a situation. The congestion information may be specified by an item other than the average speed described above, for example, image data indicating information on the number of children walking on the road or information on the number of children, and image data indicating information on the number of parked vehicles parked on the road or the number of parked vehicles. When the congestion information is the average speed of the road specified by the road ID, data of the average speed may not be stored in road NW and delivery-purpose road feature data storage unit 22, but be stored in, for example, time-of-day and road specific average speed data storage unit 23.

The road feature data described above is merely an example, and in addition thereto, information such as traffic-light information indicating the number of traffic lights installed on a road and road surface information representing an unpaved road surface or the like may be used as the road feature data.

The determination based on the road feature data described above is an example of a general determination, and it cannot be known until the vehicle actually travels. It is also sufficiently assumed that actual traveling may result in a determination that differs from the above determination. In the first embodiment, travel history learning unit 12 generates or updates a road learning model as a coefficient for calculating a road cost or a road learning model as a function for calculating a road cost, by learning travel history data of a delivery route based on actual traveling of one or more skilled drivers. Therefore, the road learning model generated by travel history learning unit 12 can contribute to improving the reliability of adaptive calculation of the road cost that reflects an actual state of the delivery vehicle in consideration of not only static (universal) feature data of the road but also dynamic (variable) feature data of the road.

Time-of-day and road specific average speed data storage unit 23 stores data of a time-of-day average speed (in other words, an index indicating how much each road is congested by time-of-day) for each road specified by the road ID. Time-of-day and road specific average speed data storage unit 23 may be provided in an external device other than road learning model generation device 1. In this case, time-of-day and road specific average speed data storage unit 23 may be omitted from road learning model generation device 1.

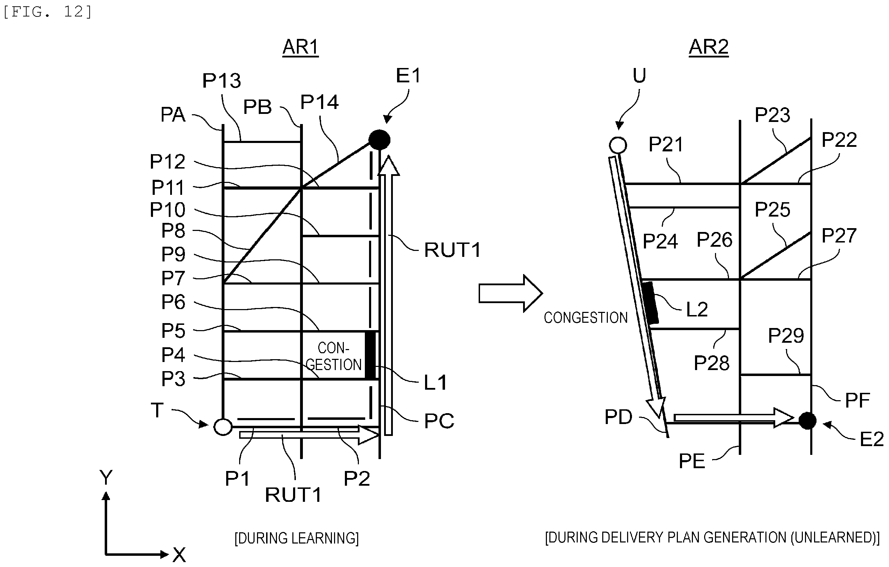

Delivery-purpose road learning model storage unit 24 stores the road learning model generated by travel history learning unit 12 in association with the delivery range information used by travel history learning unit 12 during learning. The road learning model is generated for each piece of delivery range information of a package, and is used to calculate a road cost using the road feature data (described above) input as input data. A plurality of road learning models are generated according to characteristics of a region, for example, a high region such as a basin, a low region such as a plain, and a region that is rarely visited, as a delivery range. When generating a delivery plan for delivery range information for which no road learning model is generated (in other words, the travel history data cannot be acquired), delivery plan generation devices 30 and 50 to be described later can calculate and output a road cost using road feature data (including an average speed) of a road in the delivery range information of a package and a road learning model generated based on other learned regions (see FIG. 12). The road cost may be calculated by substituting a road learning model corresponding to other already generated delivery range information with similar road feature data.

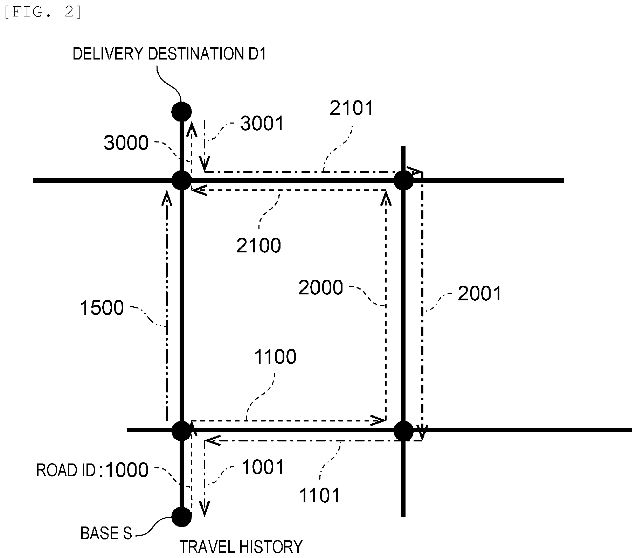

Here, the road ID and the travel history data of the delivery route along which the skilled driver traveled will be described in detail with reference to FIG. 2. FIG. 2 is a diagram showing an example of a travel history of a delivery route from base S to delivery destination D1 stored in travel history DB 21.

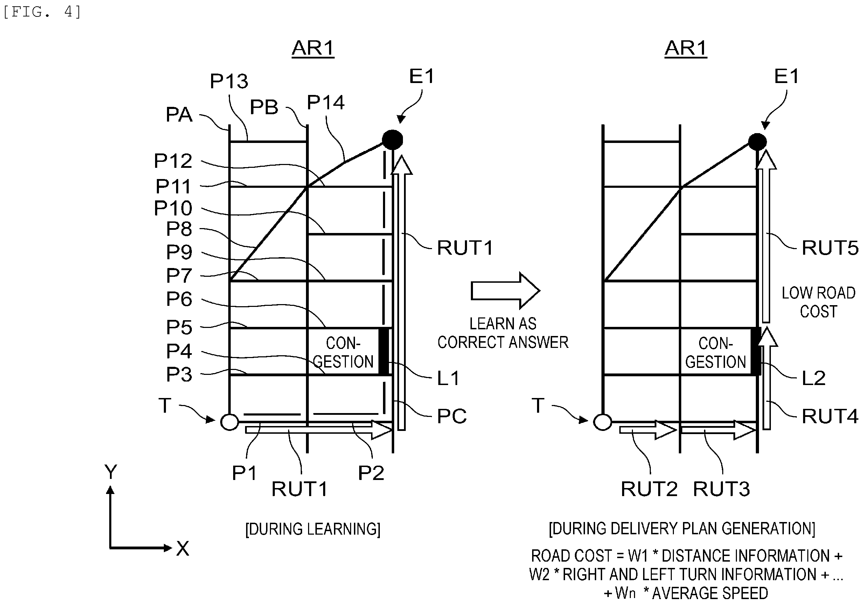

The road ID is identification information of a road, and is identification information that differs depending on a direction even for the same road (see FIG. 2). One road includes two nodes corresponding to both ends of the road and an edge between the two nodes. A distance of the edge (in other words, the distance between the two nodes) corresponds to a distance of the road. For example, when the road learning model is a set of coefficients, the road cost calculated by delivery plan generation devices 30 and 50 to be described later is a value obtained by multiplying the road feature data (including congestion information) of the road specified by the road ID by coefficients of the road learning model corresponding to the road feature data and finally adding multiplication results, and indicates the delivery efficiency of a package (an article) when the delivery vehicle travels on that road. That is, the road cost is, for example, "coefficient W1 × distance information" + "coefficient W2 × right and left turn information" + ... + "coefficient Wn × average speed" (see FIG. 4). n is an integer of 2 or more. In the present specification, the road cost described above is calculated as a sum of the multiplication result of the static information of the road and the coefficient corresponding to the static information constituting the road learning model and the multiplication result of the dynamic information of the road and the coefficient corresponding to the dynamic information constituting the road learning model. When a value of the road cost is large, the delivery efficiency is not good when the delivery vehicle travels on that road. On the other hand, when the value of the road cost is small, the delivery efficiency is good when the delivery vehicle travels on that road.

When the delivery vehicle travels from base S to delivery destination D1, three straight roads having road IDs "1000", "1500", and "3000" are selected when the shortest delivery route is given priority. However, this delivery route with the shortest distance is not an optimal delivery route for the driver to deliver the package more smoothly when congestion is likely to occur on the road having the road ID "1500" depending on the time of day. A general driver who is not a skilled driver tends to select and travel on the three distance-prioritized roads (described above).

However, when traveling from base S to delivery destination D1, a skilled driver is familiar with the characteristics of the road from base S to delivery destination D1 (in other words, the road feature data), and thus selects a detouring delivery route using five roads having road IDs "1000", "1100", "2000", "2100", and "3000". Although the detouring delivery route is longer in distance compared to the shortest route, the detouring delivery route is the optimal delivery route for smoother delivery of a package for a skilled driver who is familiar with a fact that, for example, the road having the road ID "1500" is crowded due to congestion. Therefore, travel history DB 21 stores, as travel history data between base S and delivery destination D1, a set including, for each road ID, pairs of a road ID and an average speed when passing through the road corresponding to the road ID, of all roads included in the detouring delivery route selected by the skilled driver. For example, a set of a pair of "1000" and "average speed of road having road ID '1000'", a pair of "1100" and "average speed of road having road ID '1 100'", a pair of "2000" and "average speed of road having road ID '2000'", a pair of "2100" and "average speed of road having road ID '2100'", and a pair of "3000" and "average speed of road having road ID '3000'" is the travel history data.

Even on the same road, when a direction of the road along which the delivery vehicle travels is different between a forward direction and a reverse direction, the road IDs are different as described above. For example, in the detouring delivery route described above, when traveling from delivery destination D1 to base S (an outgoing route), road IDs constituting the delivery route are "3001, 2101, 2001, 1101, 1001", and even in the same detouring delivery route, the road IDs are different from road IDs (specifically, "1000, 1100, 2000, 2100, 3000") constituting a delivery route from base S to delivery destination D1. Therefore, when traveling from delivery destination D1 to base S (a return route), the travel history data is similarly a set of a pair of "3001" and "average speed of road having road ID '3001'", a pair of "2101" and "average speed of road having road ID '2101'", a pair of "2001" and "average speed of road having road ID '2001'", a pair of " 1101" and "average speed of road having road ID '1101'", and a pair of "1001" and "average speed of road having road ID '1001'".

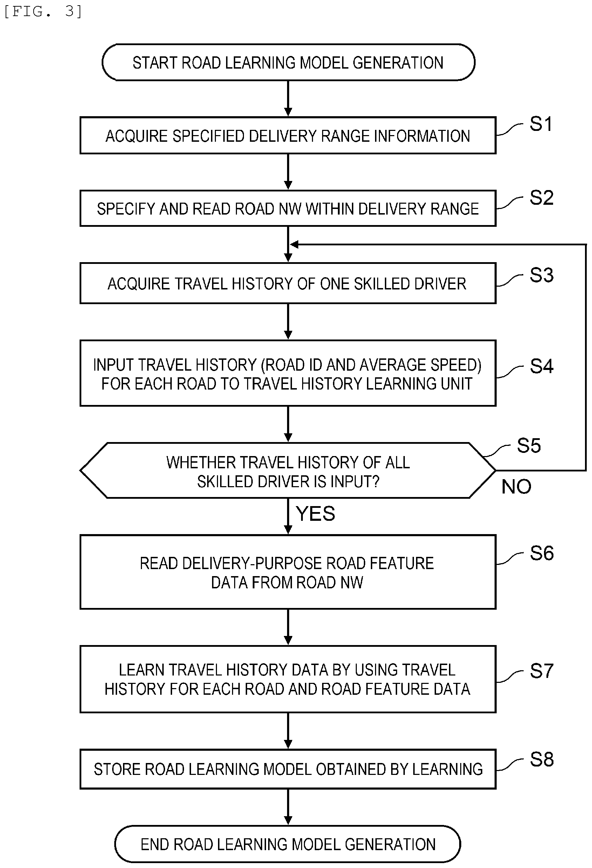

Next, an operation of road learning model generation device 1 according to the first embodiment will be described with reference to FIGS. 3 and 4. FIG. 3 is a flowchart showing in detail an example of a procedure for generating a road learning model by road learning model generation device 1 according to the first embodiment. FIG. 4 is a diagram showing an example of determining a delivery route during delivery plan generation, using a learning result and a delivery route during learning delivery range AR1 from base T to delivery destination E1. In the following description of FIG. 3, FIG. 4 will be referred to as necessary. FIG. 4 shows an example in which delivery range AR1 during learning and delivery range AR1 during the delivery plan generation are the same.

In FIG. 3, processor PRC1 receives and acquires delivery range information indicating delivery range AR1 of a package (see FIG. 4) input by an operation of a user (S1). The delivery range information is transmitted from the client terminal. Road NW and delivery-purpose road feature data reading unit 13 accesses road NW and delivery-purpose road feature data storage unit 22, and specifies and reads road network data corresponding to the delivery range information acquired in step S1 (S2).

Travel history reading unit 11 reads and acquires, from travel history DB 21, travel history data for one skilled driver within delivery range AR1 of the delivery range information acquired in step S1 (S3). Travel history reading unit 11 inputs, to travel history learning unit 12, the acquired travel history data for one skilled driver (e.g., a set of pairs of a road ID and an average speed of roads constituting delivery route RUT1 (see FIG. 4)) (S4). Travel history reading unit 11 determines whether the travel history data (described above) for all skilled drivers within delivery range AR1 of the delivery range information acquired in step S1 is acquired from travel history DB 21 and input to travel history learning unit 12 (S5). When the travel history data for all skilled drivers is not input (S5, NO), the process of road learning model generation device 1 returns to step S3.

On the other hand, when travel history reading unit 11 inputs the travel history data for all skilled drivers to travel history learning unit 12 (S5, YES), road NW and delivery-purpose road feature data reading unit 13 accesses road NW and delivery-purpose road feature data storage unit 22, and reads the road feature data of the roads constituting delivery range AR1 of the delivery range information acquired in step S1 (S6).

For example, referring to FIG. 4, the roads constituting delivery range AR1 from base T to delivery destination E1 include roads PA, PB, and PC in a Y direction, and include roads P1, P2, P3, P4, P5, P6, P7, P9, P10, P11, P12, and P13 in an X direction. Road P8 from an intersection of roads P7 and PA to an intersection of roads PB and P11 and road P14 from an intersection of roads P12 and PB to an intersection with road PC are also included as the roads constituting delivery range AR1. Here, in the travel history data input to travel history learning unit 12 in step S4, it is assumed that congestion occurred in section L1 (i.e., a road from an intersection of roads P4 and PC to an intersection of roads P6 and PC, which is on road PC) constituting delivery route RUT1 used by the skilled driver during learning. However, according to the travel history data input to travel history learning unit 12, it is indicated that the skilled driver uses delivery route RUT1 rather than using other routes.

Travel history learning unit 12 learns travel history data of a delivery route along which the skilled driver traveled in the past in the delivery range information of delivery range AR1 acquired in step S1 based on the road feature data read by road NW and delivery-purpose road feature data reading unit 13 in step S6 and the travel history data for all skilled drivers transferred from travel history reading unit 11 in step S4 (S7).

Travel history learning unit 12 generates, as a learning result in step S7, a road learning model (e.g., a coefficient or a function) for calculating a road cost indicating the delivery efficiency during travel on the roads included in the delivery range information of delivery range AR1 acquired in step S1. That is, travel history learning unit 12 learns delivery route RUT1 in FIG. 4 as a correct delivery route used by the skilled driver, including the travel history data thereof. Travel history learning unit 12 stores the generated road learning model in delivery-purpose road learning model storage unit 24 in association with the delivery range information of delivery range AR1 acquired in step S1 (S8). After step S8, the process of road learning model generation device 1 ends.

As described above, in road learning model generation device 1 according to the first embodiment, travel history DB 21 stores the travel history data (including the average speed) during delivery of a package (an article) by a delivery vehicle driven by a skilled driver. Road NW and delivery-purpose road feature data storage unit 22 stores the road network data and the road feature data for each road. Communication unit 15 receives and acquires the delivery range information indicating delivery range AR1 of the package (see FIG. 4). Travel history learning unit 12 learns the travel history data based on the travel history data (including the average speed), the road network data, and the road feature data, corresponding to the delivery range information. Accordingly, travel history learning unit 12 can generate a road learning model used for calculating a road cost indicating the delivery efficiency during travel on one or more roads included in delivery range AR1. Delivery-purpose road learning model storage unit 24 stores the generated road learning model in association with the delivery range information.

Thus, road learning model generation device 1 can efficiently generate a road learning model used for calculating a road cost with high delivery efficiency when a driver, regardless of the type of a skilled driver or a general driver, delivers a plurality of packages. Road learning model generation device 1 can improve the reliability of the road learning model by using the travel history data of the delivery vehicle driven by the skilled driver, and can assist the formulation of an optimal delivery plan that matches the situation of the actual state of the road.

The information on the road includes the road network data and the feature data including information on a distance of a road. Accordingly, road learning model generation device 1 can generate a road learning model capable of calculating a road cost that reflects a status of an actual state of a road.

The travel history data is a set of pairs of a road ID for identifying one or more roads along which the delivery vehicle traveled when delivering a package and an average speed when passing through the road specified by the road ID. Accordingly, road learning model generation device 1 can also learn an index indicating how much the delivery route along which the skilled driver traveled during the delivery of a package in the past is congested, and thus can highly accurately generate the road learning model.

The road feature data includes the road right and left turn information. Accordingly, road learning model generation device 1 can generate, based on a difference in the presence or absence of right and left turns, a road learning model capable of calculating a road cost that accurately reflects a congestion status or a vacant status of an actual state of a road. In particular, the right and left turn information is information representing whether the road turns right or left, and includes, for example, the presence or absence of right and left turns and the number of turns. In general, when there is a right turn or a left turn, the speed limit of the vehicle is set to be low and it is determined that the traveling time is long, and thus the road cost is increased. Conversely, when there is no right turn or left turn, the speed limit of the vehicle is set to be low and it is determined that the traveling time is short, and thus the road cost is reduced.

The road feature data includes the road width information. Accordingly, road learning model generation device 1 can generate, based on a difference in the road width information, a road learning model capable of calculating a road cost that accurately reflects a congestion status or a vacant status of an actual state of a road. In particular, the width information is information representing a width of a road, and is represented by a numerical value. In general, when the width of the road is small, it is determined that the traveling speed is slow, and thus the road cost is increased. Conversely, when the width of the road is large, it is determined that the traveling speed is high, and thus the road cost is reduced.

The road feature data includes the road median strip information. Accordingly, road learning model generation device 1 can generate, based on a difference in the presence or absence of a road median strip, a road learning model capable of calculating a road cost that accurately reflects a congestion status or a vacant status of an actual state of a road. In particular, the median strip information represents the presence or absence of a median strip. In general, when there is a median strip, the flow of the vehicle is smooth and it is determined that the traveling speed is high, and thus the road cost is reduced. Conversely, when there is no median strip, it is determined that the traveling speed is slow due to passing by oncoming vehicles, and thus the road cost is increased.

The road feature data includes the road crossing main road information. Accordingly, road learning model generation device 1 can generate, based on a difference whether the road crosses a main road, a road learning model capable of calculating a road cost that accurately reflects a congestion status or a vacant status of an actual state of the road. In particular, the crossing main road information represents whether a main road crosses the road. In general, when the main road crosses the road, it is determined that the traffic volume is large, and thus the road cost is increased. Conversely, when the main road does not cross the road, it is determined that the traffic volume is small, and thus the road cost is reduced.

The road feature data includes the road height difference information. Accordingly, road learning model generation device 1 can generate, based on a difference in the presence or absence of a height difference of a road, a road learning model capable of calculating a road cost that accurately reflects a congestion status or a vacant status of an actual state of a road. In particular, the height difference information represents the presence or absence of a height difference, such as an uphill slope or a downhill slope, or a degree of the height difference (e.g., height information represented by a numerical value). In general, when there is a height difference, it is determined that congestion is likely to occur, and thus the road cost is increased. Conversely, when there is no height difference, the flow of the vehicle is smooth, and thus the road cost is reduced.

Road learning model generation device 1 generates a road learning model in travel history learning unit 12 in response to a model generation request from the client terminal based on an operation of the user, including delivery range information indicating delivery range AR1 of the package. Thus, road learning model generation device 1 can generate the road learning model in accordance with the model generation request from the client terminal triggered by the operation of the user. Therefore, the user can easily instruct generation or update of the road learning model with respect to a new delivery range (e.g., an unlearned delivery range) or a delivery range that was learned once and user convenience is improved when generating or updating the road learning model.

(Second Embodiment: Delivery Plan Generation Device)

Next, an example of a delivery plan generation device will be described, in which a delivery plan for delivering a plurality of packages is formulated (generated) by using the road learning model generated by road learning model generation device 1 according to the first embodiment.

In the second embodiment, the delivery plan is a delivery route (i.e., a traveling order of a plurality of delivery destinations) determined to minimize a delivery cost (described later) based on road costs when packages (articles) are delivered from a base to a plurality of delivery destinations using at least one delivery vehicle (e.g., a truck) within a predetermined period (e.g., during one day which is a current day).

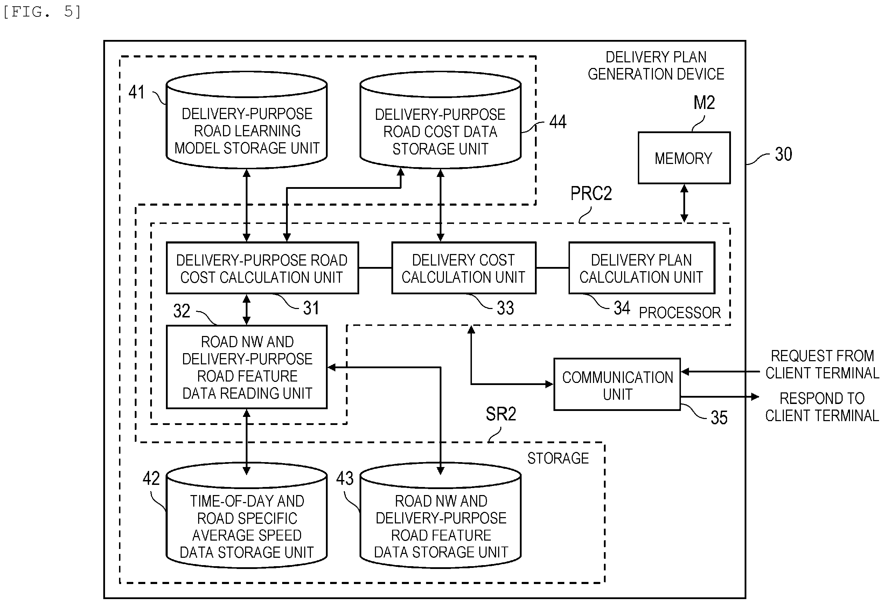

FIG. 5 is a block diagram showing in detail an example of an internal configuration of delivery plan generation device 30 according to the second embodiment. Similar to road learning model generation device 1, delivery plan generation device 30 is implemented by a computer such as a PC or a server device, and mainly includes memory M2, processor PRC2, storage SR2, and communication unit 35.

As described above, delivery plan generation device 30 may be implemented by the same PC or server device as road learning model generation device 1, or may be implemented by a separate PC or server device. When the same PC or server device is used, a timing at which the PC or server device functions as road learning model generation device 1 is different from a timing at which the PC or server device functions as delivery plan generation device 30.

Memory M2 includes a RAM and a ROM, and temporarily stores a program necessary for executing an operation of delivery plan generation device 30, and further, data or information generated during the operation. The RAM is, for example, a work memory used during the operation of processor PRC2. The ROM stores, for example, a program and data for controlling processor PRC2 in advance.

Processor PRC2 includes, for example, a CPU, a DSP, a GPU, or an FPGA. Processor PRC2 includes delivery-purpose road cost calculation unit 31, road NW and delivery-purpose road feature data reading unit 32, delivery cost calculation unit 33, and delivery plan calculation unit 34. In other words, these units (i.e., delivery-purpose road cost calculation unit 31, road NW and delivery-purpose road feature data reading unit 32, delivery cost calculation unit 33, and delivery plan calculation unit 34) are implemented by processor PRC2, by processor PRC2 reading programs and pieces of data corresponding to the respective units.

Storage SR2 (an example of the memory) includes, for example, a flash memory, an HDD, or an SSD. Storage SR2 includes delivery-purpose road learning model storage unit 41, time-of-day and road specific average speed data storage unit 42, road NW and delivery-purpose road feature data storage unit 43, and delivery-purpose road cost data storage unit 44.

Communication unit 35 includes a communication interface circuit that controls communication between delivery plan generation device 30 and an external device (e.g., a client terminal used by a user) connected to communication unit 35 via a network (e.g., a wireless LAN). The communication between communication unit 35 and the client terminal is not limited to the wireless LAN, and the client terminal may be connected to communication unit 35 via a wired LAN, or the client terminal may be directly connected to communication unit 35 via an interface such as serial communication or parallel communication. Communication unit 35 transmits and receives data to and from, for example, the client terminal described above (for example, receives delivery range data indicating an area of a delivery range of a package transmitted from the client terminal). When road learning model generation device 1 and delivery plan generation device 30 are implemented by the same PC or server device, communication unit 35 may be shared with communication unit 15.

Next, each functional configuration implemented by processor PRC2 and details of various databases or storage units provided in storage SR2 will be described. In the respective units of delivery plan generation device 30, the same configurations as those of the respective units of road learning model generation device 1 will be described with reference to a correspondence relationship between the reference numerals, and the duplicate description will be simplified or omitted, and different contents will be mainly described.

Delivery-purpose road learning model storage unit 41 has the same configuration as that of delivery-purpose road learning model storage unit 24 in FIG. 1, and stores the road learning model (e.g., a coefficient) generated by road learning model generation device 1 in association with delivery range information of a package to be generated.

Time-of-day and road specific average speed data storage unit 42 has the same configuration as time-of-day and road specific average speed data storage unit 23 in FIG. 1, and stores data of a time-of-day average speed (in other words, an index indicating how much each road is congested by time-of-day) for each road specified by a road ID. Time-of-day and road specific average speed data storage unit 42 may be provided in an external device other than delivery plan generation device 30. In this case, time-of-day and road specific average speed data storage unit 42 may be omitted from delivery plan generation device 30. When generating a delivery plan for a future time (e.g., a scheduled delivery time point indicating a scheduled delivery time described later), time-of-day and road specific average speed data storage unit 42 may have an average speed as prediction data.

Road NW and delivery-purpose road feature data storage unit 43 has the same configuration as road NW and delivery-purpose road feature data storage unit 22 in FIG. 1, and stores road network data including a road map and road feature data of each road on the road map. Elements of pieces of road feature data are the same as those described in the first embodiment, and thus the description thereof is omitted here.

Delivery-purpose road cost data storage unit 44 stores a calculation value of a road cost for each road ID, which is calculated by delivery-purpose road cost calculation unit 31 using the road learning model stored in delivery-purpose road learning model storage unit 41 in association with the road ID.

Delivery-purpose road cost calculation unit 31 calculates the road cost for each road ID for identifying each road included in the delivery range information based on the road network data and the road feature data corresponding to the delivery range information read by road NW and delivery-purpose road feature data reading unit 32, the road learning model stored in delivery-purpose road learning model storage unit 41, and congestion information corresponding to the delivery range information for a scheduled delivery time (i.e., a scheduled time point at which delivery based on the generated delivery plan is actually executed). Delivery-purpose road cost calculation unit 31 may predict and calculate the congestion information corresponding to the delivery range information for the scheduled delivery time, for example, based on a road specific and time-of-day average speed stored in time-of-day and road specific average speed data storage unit 42. Delivery-purpose road cost calculation unit 31 may recognize the congestion information corresponding to the delivery range information for the scheduled delivery time by receiving data (e.g., a captured image of a monitoring camera or text data capable of specifying the congestion information) provided from an external device. Delivery-purpose road cost calculation unit 31 stores the calculation result of the road cost for each road ID in delivery-purpose road cost data storage unit 44 in association with the corresponding road ID.

Road NW and delivery-purpose road feature data reading unit 32 have the same configuration as road NW and delivery-purpose road feature data reading unit 13 in FIG. 1. Road NW and delivery-purpose road feature data reading unit 32 reads the road network data and the road feature data of each road corresponding to the delivery range information registered in road NW and delivery road feature data storage unit 43, based on the delivery range information from communication unit 35.

The delivery range information included in a delivery plan generation request (described later) from a client terminal based on an operation of a user may indicate a target region (a so-called unlearned region) for which travel history data learning by travel history learning unit 12 is not performed (see FIG. 12). Road NW and delivery road feature data storage unit 43 stores road network data of an unlearned region and road feature data of each road in the unlearned region. Therefore, when delivery plan generation device 30 attempts to calculate a road cost for an unlearned region, road NW and delivery-purpose road feature data reading unit 32 reads, even for an unlearned region, road feature data of each road in the unlearned region. Accordingly, even in the unlearned region, delivery plan generation device 30 can appropriately formulate a delivery plan using a road learning model of a region for which learning is already performed (so-called learned region) (see FIG. 12).

Delivery cost calculation unit 33 calculates, for example, a delivery cost from a current position (i.e., a starting point) to a next delivery destination (i.e., a destination), based on the road network data read from road NW and delivery-purpose road feature data storage unit 43 and the calculation value of the road cost for each road ID stored in delivery-purpose road cost data storage unit 44. Here, the delivery cost indicates the delivery efficiency of a package when the delivery vehicle travels along a delivery route formed by connecting one or more roads (e.g., a delivery route formed by one or more roads connecting a certain delivery destination and a next delivery destination), and specifically, is an addition value of road costs for roads forming the delivery route. For example, the delivery cost is 45 (= 10 + 15 + 20) when the delivery route is "road having road ID '101' + road having road ID '102' + road having road ID '103'" and the respective road costs are 10, 15, and 20.

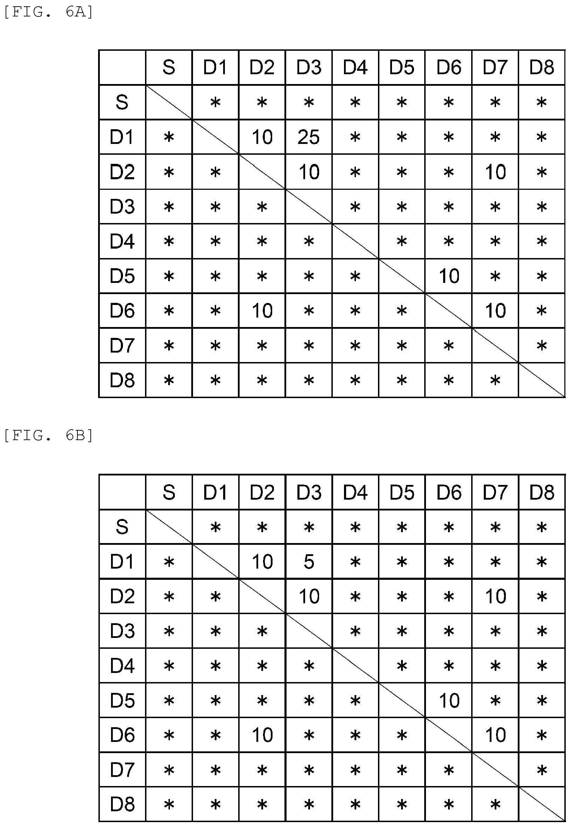

FIG. 6A is a table showing an example of distances of roads between respective delivery destinations before learning. FIG. 6B is a table showing an example of delivery costs corresponding to the roads between the delivery destinations after learning. In the description of FIGS. 6A and 6B, each of base S and delivery destinations D1, D2, D3, D4, D5, D6.D7, and D8 represents a node. Base S and delivery destinations D1 to D8 in a vertical direction represent starting points, and base S and delivery destinations D1 to D8 in a horizontal direction represent destinations. In the table representing the distances of the roads between the respective delivery destinations before learning, a distance from delivery destination D1 to delivery destination D3 is represented by "25". On the other hand, after learning by travel history learning unit 12, a delivery cost from delivery destination D1 to delivery destination D3 is represented by "5". Delivery plan generation device 30 generates the delivery plan based on the delivery cost corresponding to the road instead of the distance of the road from the current position to the next delivery destination as shown in FIG. 6A. Therefore, a delivery route is selected to reduce a delivery cost (i.e., a road cost corresponding to one road or an addition value of road costs corresponding to a plurality of roads) shown in FIG. 6B. In the description of FIGS. 6A and 6B, the values of the delivery costs (distances) between other two points are the same, and "*" written in the table represents any value.

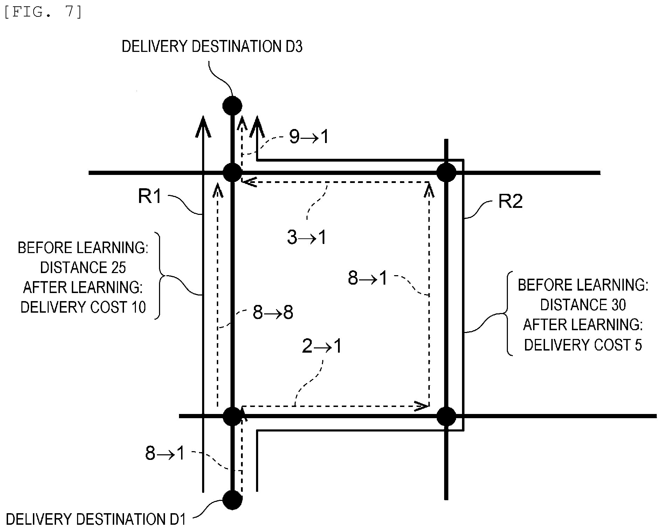

FIG. 7 is a diagram showing an example of distances of respective roads from delivery destination D1 to delivery destination D3 before learning and delivery costs corresponding to the respective roads after learning. In a case of traveling from delivery destination D1 to delivery destination D3, the distance is "8 + 8 + 9", i.e., "25" when traveling along straight delivery route R1 that is the shortest distance before learning. On the other hand, in the case of delivery route R2 detouring by the skilled driver, a total distance is "8 + 2 + 8 + 3 + 9", i.e., "30". Therefore, before learning, since the distance is shorter when traveling along shortest delivery route R1 than when traveling along detouring delivery route R2, it is considered to be preferable to travel using delivery route R1 from the viewpoint of delivery efficiency.

However, after learning by travel history learning unit 12, the road cost of each road ID changes dynamically (i.e., depending on timing) as a result of reflecting the actual state, unlike a static (i.e., pre-fixed) distance value to point to an index that reflects the actual state of each road. Therefore, in the case of traveling from delivery destination D1 to delivery destination D3, the delivery cost is "1 + 8 + 1", i.e., "10" when traveling along shortest delivery route R1. On the other hand, in the case of delivery route R2 detouring by the skilled driver, a total delivery cost is "1 + 1 + 1 + 1 + 1", i.e., "5". Therefore, after the learning, the delivery cost is lower when traveling along delivery route R2 detouring by the skilled driver than when traveling along shortest delivery route R1. In this way, by selecting the delivery route not based on a simple distance but based on the delivery cost, it is possible to generate (formulate) a delivery plan capable of improving the delivery efficiency of a driver.

Delivery plan calculation unit 34 calculates a delivery plan from the starting point to the destination based on the calculation value of the delivery cost corresponding to the delivery range information calculated by delivery cost calculation unit 33. When road learning model generation device 1 and delivery plan generation device 30 are implemented by the same PC or server device, road NW and delivery-purpose road feature data reading units 13 and 32, delivery-purpose road learning model storage units 24 and 41, and road NW and delivery-purpose road feature data storage units 22 and 43 may be shared.

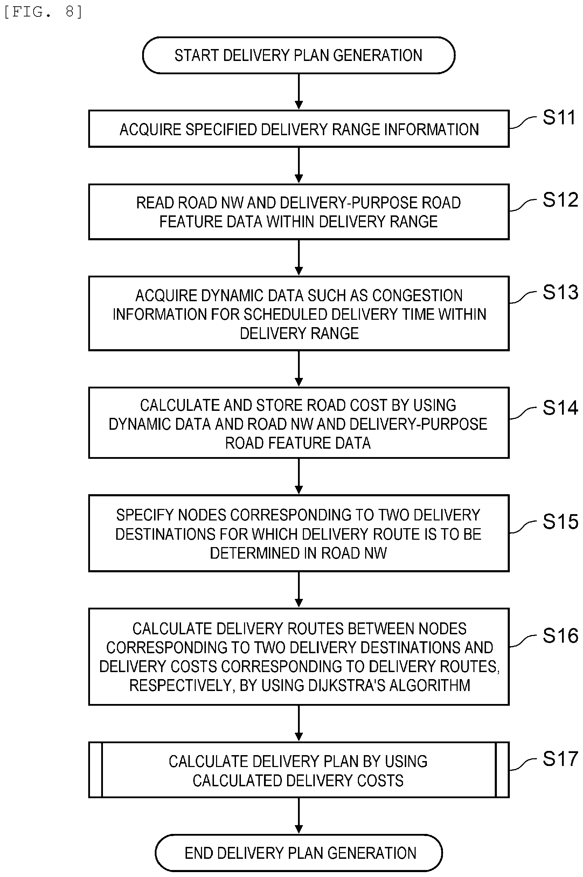

Next, an operation of delivery plan generation device 30 according to the second embodiment will be described with reference to FIGS. 8 and 4. FIG. 8 is a flowchart showing in detail an example of a procedure for generating a delivery plan by delivery plan generation device 30 according to the second embodiment. The process of FIG. 8 is performed at different timings when road learning model generation device 1 and delivery plan generation device 30 are implemented by the same PC or server device. As a premise of the description of FIG. 8, delivery-purpose road learning model storage unit 41 stores the road learning model (e.g., a coefficient or a function) generated by travel history learning unit 12. In the following description of FIG. 8, FIG. 4 will be referred to as necessary.

In FIG. 8, processor PRC2 receives and inputs the delivery range information indicating delivery range AR1 of the package (see FIG. 4) input by the operation of the user (S1 1). The delivery range information is transmitted from the client terminal. Road NW and delivery-purpose road feature data reading unit 32 accesses road NW and delivery-purpose road feature data storage unit 43, and reads the road network data and the road feature data of each road corresponding to the delivery range information acquired in step S11 (S12).

Delivery-purpose road cost calculation unit 31 acquires the congestion information corresponding to the delivery range information for a scheduled delivery time (i.e., a scheduled time at which the delivery based on the generated delivery plan is actually executed) (S13). The scheduled delivery time may include a current time when the delivery is scheduled to be executed from now. For example, referring to FIG. 4, delivery-purpose road cost calculation unit 31 acquires information indicating that congestion is occurring or will occur in section L2 in delivery range AR1 from base T to delivery destination E1 at the scheduled delivery time. The congestion information in step S13 may be acquired by, for example, predicting and calculating based on a road specific and time-of-day average speed stored in time-of-day and road specific average speed data storage unit 42, or may be acquired by receiving data provided from an external device (e.g., a captured image of a monitoring camera or text data capable of specifying congestion information).

Delivery-purpose road cost calculation unit 31 accesses delivery-purpose road learning model storage unit 41 and acquires a learned road learning model corresponding to the delivery range information input in step S11. Delivery-purpose road cost calculation unit 31 calculates the road costs corresponding to the roads included in the delivery range information, respectively, by using the acquired learned road learning model, the road feature data of each road read by road NW and delivery-purpose road feature data reading unit 32 in step S12, and the congestion information (see FIG. 4) corresponding to the delivery range information acquired in step S13 (S14). Delivery-purpose road cost calculation unit 31 stores the calculation values of the road costs for each road in delivery-purpose road cost data storage unit 44 in association with the road ID (S14).

Delivery cost calculation unit 33 sequentially specifies nodes of two delivery destinations (including the base) for which the delivery route is to be determined in the road network data corresponding to the delivery range information read in step S12 (S15). Delivery cost calculation unit 33 uses Dijkstra's algorithm to determine delivery routes having the sequentially specified nodes of two delivery destinations, and calculate delivery costs corresponding to the determined delivery routes (S16).

Delivery plan calculation unit 34 calculates a delivery plan using the delivery costs determined in step S16 (S17). In the calculation of the delivery plan, the delivery route in the road network data is determined based on the delivery cost. For example, referring to FIG. 4, the delivery route is determined as a route determined in order of roads RUT2, RUT3, RUT4, and RUT5 where the delivery cost is the smallest in forming the delivery route from base T to delivery destination E1 among the road costs for each road calculated in step S14. Details of the calculation of the delivery plan will be described later. After step S17, the process of delivery plan generation device 30 ends.

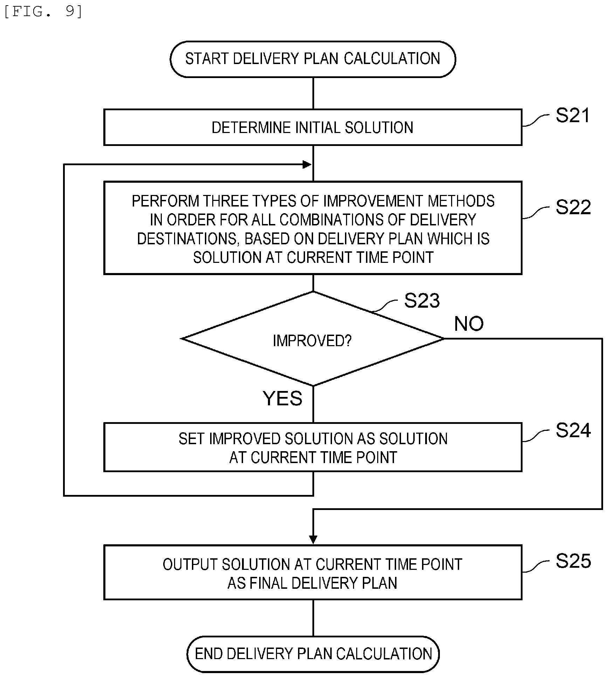

FIG. 9 is a flowchart showing in detail an example of a procedure for calculating the delivery plan in step S17 in FIG. 8.

In FIG. 9, delivery plan calculation unit 34 determines an initial solution of the delivery plan by using the delivery costs determined in step S16 (S21). Here, the initial solution of the delivery plan is a delivery plan including the delivery route and the delivery cost determined in step S16 described above. The initial solution may be a delivery plan manually formulated by the skilled driver based on the delivery routes and the delivery costs determined in step S16 described above.

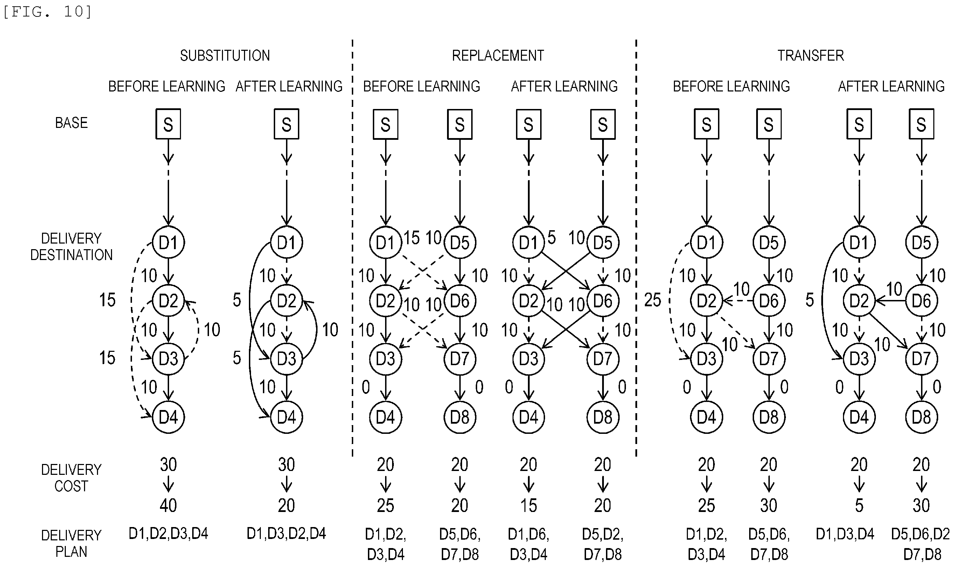

Delivery plan calculation unit 34 sequentially performs, for example, three types of improvement methods shown in FIG. 10 for all combinations of delivery destinations based on the delivery plan which is a solution at a current time point (S22). Here, the solution at the current time point is the initial solution determined in step S21 or an improved solution obtained in step S24 to be described later.

FIG. 10 is a diagram showing an example of the three types of improvement methods used in step S22 in FIG. 9. The three types of improvement methods are, for example, substitution, replacement, and transfer. The substitution represents that an order of the delivery destinations is exchanged. The replacement represents that the delivery destination is exchanged between a plurality of delivery routes. The transfer represents that the delivery destination is transferred to another delivery route. Specific examples of the substitution, replacement, and transfer are shown in the following (A), (B), and (C).

(A) Substitution

In a delivery plan before learning, before substitution, delivery is performed using one delivery vehicle in delivery order of base S → delivery destinations D1 → D2 → D3 → D4. In the delivery plan before the learning and the substitution, the delivery cost (in other words, the distance) is "10 + 10 + 10 = 30" corresponding to the same one delivery vehicle.

On the other hand, before the learning and after the substitution, delivery is performed using the same one delivery vehicle in delivery order of base S → delivery destinations D1 → D3 → D2 → D4. In the delivery plan before the learning and after the substitution, the delivery cost is "15 + 10 + 15 = 40" corresponding to the same one delivery vehicle. Therefore, when the substitution is performed at a time point before the learning, the delivery cost is increased, and thus the delivery plan is not improved. Note that "before learning" may be before starting learning or immediately after starting learning. This also applies to the following (B) and (C).

In a delivery plan after the learning, before the substitution, delivery is performed using one delivery vehicle in delivery order of base S → delivery destinations D1 → D2 → D3 → D4. In the delivery plan after the learning and before the substitution, the delivery cost (in other words, the distance) is "10 + 10 + 10 = 30" corresponding to the same one delivery vehicle, which is the same as that before the learning.

On the other hand, after the learning and the substitution, delivery is performed using the same one delivery vehicle in delivery order of base S → delivery destinations D1 → D3 → D2 → D4. In the delivery plan after the learning and the substitution, the delivery cost is "5 + 10 + 5 = 20" corresponding to the same one delivery vehicle. Therefore, when the substitution is performed at a time point after the learning, the delivery cost is reduced, and thus the delivery plan is improved. Note that "after learning" represents that a considerable amount of learning is completed. This also applies to the following (B) and (C).

(B) Replacement

In a delivery plan before learning, before replacement, delivery is performed using a first delivery vehicle in delivery order of base S → delivery destinations D1 → D2 → D3 → D4, and delivery is performed using a second delivery vehicle in delivery order of base S → delivery destinations D5 → D6 → D7 → D8. In the delivery plan before the learning and the replacement, the delivery cost (in other words, the distance) is "40" obtained by adding "10 + 10 + 0 = 20" corresponding to the same first delivery vehicle and "10 + 10 + 0 = 20" corresponding to the same second delivery vehicle.

On the other hand, before the learning and after the replacement, delivery is performed using the same first delivery vehicle in delivery order of base S → delivery destinations D1 → D6 → D3 → D4, and delivery is performed using the same second delivery vehicle in delivery order of base S → delivery destinations D5 → D2 → D7 → D8. In the delivery plan before the learning and after the replacement, the delivery cost (in other words, the distance) is "45" obtained by adding "15 + 10 + 0 = 25" corresponding to the first delivery vehicle and "10 + 10 + 0 = 20" corresponding to the second delivery vehicle. Therefore, when the replacement is performed at a time point before the learning, the delivery cost is totally increased, and thus the delivery plan is not improved.

In a delivery plan after the learning, before the replacement, delivery is performed using the first delivery vehicle in delivery order of base S → delivery destinations D1 → D2 → D3 → D4, and delivery is performed using the second delivery vehicle in delivery order of base S → delivery destinations D5 → D6 → D7 → D8. In the delivery plan after the learning and before the replacement, the delivery cost is "40" obtained by adding "10 + 10 + 0 = 20" corresponding to the first delivery vehicle and "10 + 10 + 0 = 20" corresponding to the second delivery vehicle, which is the same as that before the learning.

On the other hand, after the learning and the replacement, delivery is performed using the same first delivery vehicle in delivery order of base S → delivery destinations D1 -> D6 → D3 → D4, and delivery is performed using the same second delivery vehicle in delivery order of base S → delivery destinations D5 → D2 → D7 -> D8. In the delivery plan after the learning and the replacement, the delivery cost is "35" obtained by adding "5 + 10 + 0 = 15" corresponding to the same first delivery vehicle and " 10 + 10 + 0 = 20" corresponding to the same second delivery vehicle. Therefore, when the replacement is performed at a time point after the learning, the delivery cost after the learning is totally reduced, and thus the delivery plan is improved.

(C) Transfer

In a delivery plan before learning, before transfer, as in the case of the replacement, delivery is performed using the first delivery vehicle in delivery order of base S → delivery destinations D1 → D2 → D3 → D4, and delivery is performed using the second delivery vehicle in delivery order of base S → delivery destinations D5 → D6 → D7 → D8. In the delivery plan before the learning and the transfer, as in the case of the replacement, the delivery cost (in other words, the distance) is "40" obtained by adding "10 + 10 + 0 = 20" corresponding to the first delivery vehicle and " 10 + 10 + 0 = 20" corresponding to the second delivery vehicle.

On the other hand, before the learning and after the transfer, delivery is performed using the same first delivery vehicle in delivery order of base S → delivery destinations D1 → D3 → D4, and delivery is performed using the same second delivery vehicle in delivery order of base S → delivery destinations D5 → D6 → D2 → D7 → D8. In the delivery plan before the learning and after the transfer, the delivery cost (in other words, the distance) is "55" obtained by adding "25 + 0 = 25" corresponding to the first delivery vehicle and "10 + 10 + 10 + 0 = 30" corresponding to the second delivery vehicle. Therefore, when the transfer is performed at a time point before the learning, the delivery cost is totally increased, and thus the delivery plan is not improved.

In the delivery plan after the learning, before the transfer, delivery is performed using the first delivery vehicle in delivery order of base S → delivery destinations D1 → D2 → D3 → D4, and delivery is performed using the second delivery vehicle in delivery order of base S → delivery destinations D5 → D6 → D7 → D8. In the delivery plan after the learning and before the transfer, the delivery cost is "40" obtained by adding "10 + 10 + 0 = 20" corresponding to the first delivery vehicle and " 10 + 10 + 0 = 20" corresponding to the second delivery vehicle, which is the same as that before the learning.

On the other hand, after the learning and the transfer, as in the case before the learning, the delivery is performed using the same first delivery vehicle in delivery order of base S → delivery destinations D1 → D3 → D4, and the delivery is performed using the same second delivery vehicle in delivery order of base S → delivery destinations D5 → D6 → D2 → D7 → D8. In the delivery plan after the learning and the transfer, the delivery cost is "35" obtained by adding "5 + 0 = 5" corresponding to the same first delivery vehicle and "10 + 10 + 10 + 0 = 30" corresponding to the same second delivery vehicle. Therefore, when the transfer is performed at a time point after the learning, the delivery cost after the learning is totally reduced, and thus the delivery plan is improved.

Delivery plan calculation unit 34 determines whether the delivery plan is improved as a result of performing the three types of improvement methods for all the combinations of delivery destinations (S23). Improvement of the delivery plan corresponds to reduction of the delivery cost. When the delivery plan is improved, delivery plan calculation unit 34 sets the improved delivery plan as the current solution (S24). The process of delivery plan calculation unit 34 returns to step S22.

On the other hand, when the delivery plan is not improved in step S23 (S23, NO), delivery plan calculation unit 34 responds from communication unit 35 to the client terminal with the current solution as the final delivery plan (S25). The client terminal displays the final delivery plan on a monitor (not shown). For example, the delivery plan (including the delivery cost and the delivery route) after the learning shown in FIG. 10 is displayed on the monitor. In the second embodiment, for example, the three types of improvement methods are used to improve the delivery plan, and the delivery plan may be calculated without using the three types of improvement methods.

As described above, in delivery plan generation device 30 according to the second embodiment, communication unit 35 receives and acquires delivery range information indicating a delivery range of an article (e.g., a package). Storage SR2 stores road feature information (e.g., road feature data) indicating characteristics of roads corresponding to the delivery range information in road NW and delivery-purpose road feature data storage unit 43, and further stores past congestion information in travel history DB 21. Processor PRC2 acquires road network information (e.g., road network data) indicating a connection relationship between the roads, acquires learning information (e.g., a road learning model) generated based on a travel history of a delivery vehicle that delivers an article, and the past congestion information and the road feature information on the roads corresponding to the travel history, acquires congestion information on the roads for a scheduled delivery time, and calculates road costs for the roads for the scheduled delivery time based on the road feature information, the congestion information for the scheduled delivery time, and the learning information. Processor PRC2 generates a delivery plan of the article by using the road network information and the road cost.

Accordingly, delivery plan generation device 30 can adaptively assist the formulation of the package delivery plan in consideration of situations of roads to a package delivery destination that are different from those in the past at the scheduled delivery time. Since the road learning is generated by using the road learning model (e.g., a coefficient or a function) obtained by learning the travel history data of a skilled driver, delivery plan generation device 30 can determine a delivery route that reflects an actual state of the road at the time of desired delivery, regardless of whether the driver is a new person or a veteran, and thus it is possible to reduce the burden on the driver who delivers the package.

Processor PRC2 generates the learning information based on the travel history of the delivery vehicle, and the past congestion information and the road feature information on the roads corresponding to the travel history. Accordingly, delivery plan generation device 30 can generate highly reliable learning information by using a delivery route through which the skilled driver passed during learning as training data of a correct answer and using both static information and dynamic information such as congestion information of the delivery route.

Processor PRC2 acquires, from the external device, the congestion information on the roads corresponding to the delivery range information for the scheduled delivery time. Accordingly, processor PRC2 can easily acquire the congestion information on the roads corresponding to the delivery range information for the scheduled delivery time.

Processor PRC2 predicts the congestion information on the roads for the scheduled delivery time based on the past congestion information on the roads corresponding to the delivery range information. Accordingly, since processor PRC2 can highly accurately predict congestion information on roads to be used for future delivery for the scheduled delivery time, processor PRC2 can appropriately calculate the road costs of the roads corresponding to the delivery range information.

When the past congestion information on the roads and the congestion information on the roads for the scheduled delivery time do not have data of the same item indicating the congestion situation, processor PRC2 converts, data of an item of one of the past congestion information on the roads and the congestion information on the roads for the scheduled delivery time, into data of an item of the other one of the past congestion information on the roads and the congestion information on the roads for the scheduled delivery time. For example, there is a possibility that data indicating the past congestion information is the average speed of the road, and data indicating the congestion information for the scheduled delivery time is the number of parked vehicles per unit time (e.g., one minute) on the road. Road NW and delivery-purpose road feature data storage unit 43 holds a conversion formula indicating a proportional relationship between the average speed (e.g., 10 km/h) and the number of parked vehicles (e.g., 50 vehicles/minute) indicating the congestion information. This conversion formula is not limited to a formula representing a proportional relationship between the average speed and the number of parked vehicles. Processor PRC2 may regard the average speed (e.g., 10 km/h) and the number of parked vehicles per unit time (e.g., 50 vehicles/minute) as being the same, and may convert the average speed into the number of parked vehicles per unit time, or conversely, may convert the number of parked vehicles per unit time into the average speed. Accordingly, even when the past congestion information on the roads and the congestion information on the roads for the scheduled delivery time do not have the data of the same item indicating the congestion situation, processor PRC2 can appropriately calculate the road costs for the roads and improve convenience.

When the number of items constituting the road feature information during calculating the road cost is smaller than the number of items constituting the road feature information during learning (in other words, during generating the learning information), processor PRC2 re-generates the learning information using the data of the items constituting the road feature information during the road cost calculation. For example, it is assumed that the number of items constituting the road feature information during learning in the past is four, and the number of items constituting the road feature information for the scheduled delivery time is three. Specifically, it is assumed that the items constituting the road feature information during the learning in the past are four items of "distance information", "right and left turn information", "width information", and "congestion information", and the items constituting the road feature information for the scheduled delivery time are three items of "distance information", "width information", and "congestion information". In this case, processor PRC2 re-learns the past travel history data using three items of "distance information", "width information", and "congestion information" constituting the road feature information for the scheduled delivery time. Accordingly, since the reliability of the road learning model (e.g., a coefficient or a function) is improved by re-learning using the same items as the items obtained during calculating the road cost, processor PRC2 can highly accurately calculate the road costs for the roads corresponding to the delivery range information at the time of determining a delivery route.

Although the embodiments are described above with reference to the drawings, it is needless to say that the present disclosure is not limited to such examples. It is obvious that a person skilled in the art can conceive of various modifications or corrections within the scope described in the claims, and it is understood that such modifications or corrections naturally belong to the technical scope of the present disclosure. The components in the above-described embodiments may be freely combined without departing from the gist of the invention.

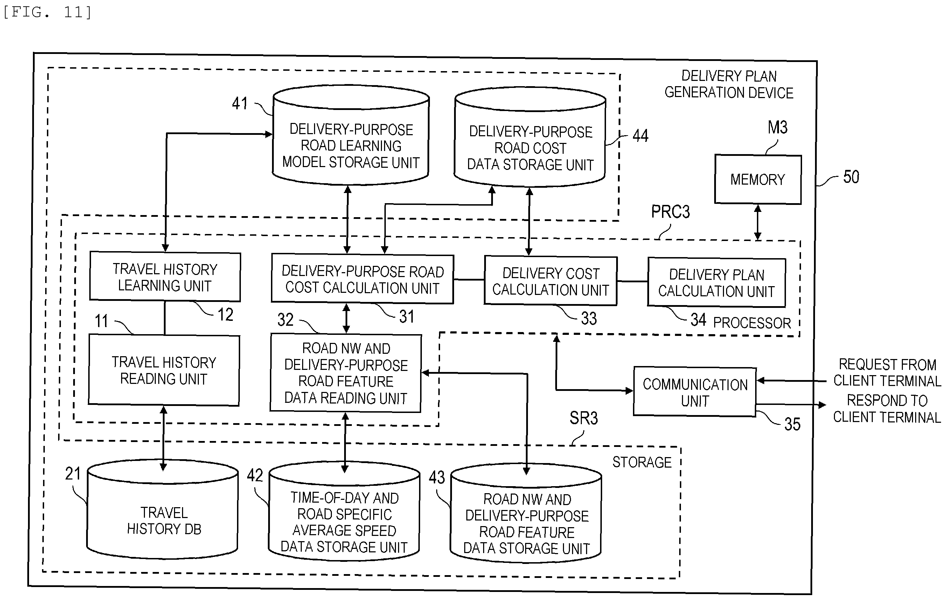

For example, delivery plan generation device 30 according to the second embodiment may further include the configuration of road learning model generation device 1 according to the first embodiment (see FIG. 11). FIG. 11 is a block diagram showing in detail an example of an internal configuration of delivery plan generation device 50 according to a modification of the second embodiment. Similar to road learning model generation device 1 or delivery plan generation device 30, delivery plan generation device 50 is implemented by a computer such as a PC or a server device, and mainly includes memory M3, processor PRC3, storage SR3, and communication unit 35. The configuration of delivery plan generation device 50 is a combination of road learning model generation device 1 according to the first embodiment and delivery plan generation device 30 according to the second embodiment. In FIG. 11, the same elements as those in FIG. 1 or FIG. 5 are given the same reference numerals, and the description thereof is simplified or omitted. Accordingly, delivery plan generation device 50 can obtain not only the effect of the configuration of delivery plan generation device 30 but also the effect of the configuration of road learning model generation device 1. For example, when a driver delivers a plurality of packages, delivery plan generation device 50 can formulate an optimal delivery plan that matches a situation of an actual state of roads, and can efficiently generate a road learning model that can calculate a delivery route with high delivery efficiency when the driver delivers the plurality of packages regardless of the type of a skilled driver or a general driver.

For example, in the embodiment described above, a plurality of types of tables (see FIG. 6B) representing a delivery cost may be prepared so that the road cost can be selectively used depending on a delivery destination even within the same delivery range. For example, the plurality of tables may be prepared by separating, by frequency, a frequent delivery destination and an infrequent delivery destination.

In the embodiments described above, the final delivery plan is transmitted to the client terminal and displayed on the monitor of the client terminal. However, delivery plan generation devices 30 and 50 may each have a monitor and an output interface in its own device, and may display the delivery plan on the monitor of its own device instead of the client terminal.

In the embodiments described above, delivery plan calculation unit 34 may calculate the delivery plan by another method using the delivery-purpose road cost without using the delivery cost of delivery cost calculation unit 33.

In the embodiments described above, travel history learning unit 12 may perform learning of the travel history data (e.g., inverse reinforcement learning) in units of individual delivery destinations. In this case, travel history learning unit 12 learns the travel history data using, as the travel history data, only the travel history data at the time of delivery to the target delivery destination. Travel history learning unit 12 may learn the travel history data by using travel history data at the time of performing delivery from the immediately preceding delivery destination to the next delivery destination as the travel history data. The road network information in this case may correspond to the minimum delivery range including the corresponding travel history data. Alternatively, the delivery destination may be divided into areas, and road network data in units of the divided areas may be used.

FIG. 12 is a diagram showing an example of determining a delivery route during delivery plan generation in an unlearned region, using a learning result in a learned region. In order to simplify the description of FIG. 12, learning of travel history data of delivery range AR1 is denoted by the same reference numerals as the corresponding elements in FIG. 4, and the description of the configuration of the same reference numerals will be simplified or omitted, and different contents will be described. Unlearned region AR2 in FIG. 12 is a region for which a road learning model (e.g., a coefficient or a function) is not generated because a skilled driver did not use unlearned region AR2 for delivery in the past and the travel history data cannot be learned.

Specifically, in unlearned region AR2, roads constituting unlearned region AR2 from base U to delivery destination E2 include roads PD, PE, and PF in a Y direction, and include roads P21, P22, P24, P26, P27, P28, and P29 in an X direction. Road P23 from an intersection of roads P22 and PE to an intersection with road PF and road P25 from an intersection of roads P27 and PE to an intersection with road PF are also included as the roads constituting unlearned region AR2. Here, it is assumed that congestion is currently occurring in section L2 (i.e., a road from an intersection of roads P26 and PD to an intersection of roads P28 and PD, which is on road PD).

In FIG. 12, when generating a delivery plan for unlearned region AR2, delivery plan generation devices 30 and 50 calculate road costs for the roads constituting unlearned region AR2 based on road learning model (e.g., a coefficient or a function) corresponding to delivery range AR1 which is a learned region, road feature data for the roads constituting unlearned region AR2, and congestion information for a scheduled delivery time. Here, it is assumed that contents of items of the road feature data used during learning in delivery range AR1 matches contents of items of the road feature data used during calculating the road cost in unlearned region AR2.

It is desirable that the road network data corresponding to delivery range AR1 which is a learned region and the road network data of unlearned region AR2 are similar to each other. However, even when they are not similar to each other, delivery plan generation devices 30 and 50 may calculate the road costs for the roads constituting unlearned region AR2 based on the road learning model (e.g., a coefficient or a function) corresponding to delivery range AR1 which is a learned region, the road feature data for the roads constituting unlearned region AR2, and the congestion information for the scheduled delivery time. Accordingly, delivery plan generation devices 30 and 50 can generate an appropriate delivery plan even using a road learning model obtained as a result of learning of the travel history data in the past such as delivery range AR1 when a new delivery is to be performed in unlearned region AR2.

The present disclosure is also applicable to a program and a storage medium that are supplied to a device via a network or various storage media to implement the functions of the devices according to the embodiments described above, and are read and executed by a computer in the device.

INDUSTRIAL APPLICABILITY

The present disclosure is useful as a delivery plan generation device and a delivery plan generation method that efficiently formulate a package delivery plan in consideration of situations of roads to a package delivery destination that are different from those in the past at a scheduled delivery time.

REFERENCE MARKS IN THE DRAWINGS

1 Road learning model generation device
11 Travel history reading unit
12 Travel history learning unit

13, 32 Road NW and delivery-purpose road feature data reading unit

15, 35 Communication unit

21 Travel history DB

22, 43 Road NW and delivery-purpose road feature data storage unit

23, 42 Time-of-day and road specific average speed data storage unit

24, 41 Delivery-purpose road learning model storage unit

30, 50 Delivery plan generation device

31 Delivery-purpose road cost calculation unit

33 Delivery cost calculation unit

34 Delivery plan calculation unit

44 Delivery-purpose road cost data storage unit

AR1 Delivery range

AR2 Unlearned region

M1, M2, M3 Memory

PRC 1, PRC2, PRC3 Processor

SR1, SR2, SR3 Storage

**Claims**

1. A delivery plan generation device comprising:

a processor;

a communication unit that acquires delivery range information indicating a delivery range of an article; and

a memory that stores past congestion information and road feature information indicating characteristics of roads corresponding to the delivery range information,

wherein the processor

acquires road network information indicating a connection relationship between the roads,

acquires learning information generated based on a travel history of a delivery vehicle that delivers the article, and the past congestion information and the road feature information on the roads corresponding to the travel history,

acquires congestion information on the roads for a scheduled delivery time,

calculates road costs for the roads based on the road feature information, the congestion information for the scheduled delivery time, and the learning information, and

generates a delivery plan of the article by using the road network information and the road costs.

2. The delivery plan generation device of Claim 1, wherein the processor generates the learning information based on the travel history of the delivery vehicle, and the past congestion information and the road feature information on the roads corresponding to the travel history.

3. The delivery plan generation device of Claim 1, wherein the processor acquires the congestion information for the scheduled delivery time from an external device.

4. The delivery plan generation device of Claim 1, wherein the processor predicts the congestion information for the scheduled delivery time based on the past congestion information on the roads corresponding to the delivery range information.

5. The delivery plan generation device of Claim 1, wherein when the past congestion information and the congestion information for the scheduled delivery time do not have data of the same item indicating a congestion situation, the processor converts, data of an item of one of the past congestion information and the congestion information for the scheduled delivery time, into data of an item of the other one of the past congestion information and the congestion information for the scheduled delivery time.

6. The delivery plan generation device of Claim 2, wherein when the number of items constituting the road feature information during calculating the road costs is smaller than the number of items constituting the road feature information during generating the learning information, the processor re-generates the learning information using data of the items constituting the road feature information during calculating the road costs.

7. A delivery plan generation method comprising:

acquiring delivery range information indicating a delivery range of an article;
acquiring past congestion information and road feature information indicating characteristics of roads corresponding to the delivery range information;
acquiring road network information indicating a connection relationship between the roads;
acquiring learning information generated corresponding to a travel history of a delivery vehicle that delivers the article, and the past congestion information and the road feature information on the roads corresponding to the travel history;
acquiring congestion information on the roads for a scheduled delivery time;
calculating road costs for the roads based on the road feature information, the congestion information for the scheduled delivery time, and the learning information; and
generating a delivery plan of the article by using the road network information and the road costs.

[FIG. 1]

ROAD LEARNING MODEL
GENERATION DEVICE

1

PRC1

DELIVERY-PURPOSE
ROAD LEARNING
MODEL STORAGE UNIT
24

TRAVEL HISTORY
READING UNIT
11

TRAVEL HISTORY
LEARNING UNIT
12

MEMORY
M1

PROCESSOR

13

ROAD NW AND
DELIVERY-PURPOSE
ROAD FEATURE DATA
READING UNIT

COMMUNICATION
UNIT
15

REQUEST
FROM CLIENT
TERMINAL

21

TRAVEL
HISTORY DB

SR1

22
ROAD NW AND
DELIVERY-PURPOSE
ROAD FEATURE
DATA STORAGE UNIT

23
TIME-OF-DAY AND
ROAD SPECIFIC
AVERAGE SPEED
DATA STORAGE UNIT

STORAGE

EP 4 148 009 A1

[FIG. 2]

DELIVERY DESTINATION D1

3001
2101
3000
2100
2000
2001
1500
1100
ROAD ID：1000
1001
1101
BASE S
TRAVEL HISTORY

[FIG. 3]

```
        START ROAD LEARNING MODEL GENERATION

   ACQUIRE SPECIFIED DELIVERY RANGE INFORMATION          S1

   SPECIFY AND READ ROAD NW WITHIN DELIVERY RANGE        S2

   ACQUIRE TRAVEL HISTORY OF ONE SKILLED DRIVER          S3

   INPUT TRAVEL HISTORY (ROAD ID AND AVERAGE SPEED)      S4
   FOR EACH ROAD TO TRAVEL HISTORY LEARNING UNIT

   WHETHER TRAVEL HISTORY OF ALL                         S5
   SKILLED DRIVER IS INPUT?                    NO

            YES

   READ DELIVERY-PURPOSE ROAD FEATURE                    S6
   DATA FROM ROAD NW

   LEARN TRAVEL HISTORY DATA BY USING TRAVEL             S7
   HISTORY FOR EACH ROAD AND ROAD FEATURE DATA

   STORE ROAD LEARNING MODEL OBTAINED BY LEARNING        S8

        END ROAD LEARNING MODEL GENERATION
```

[FIG. 4]

AR1

AR1

P13

PA P14 E1

PB E1

P12
P11
P10
P8
P9
P7
P6
P5
P4
P3
T

RUT1

CON-
GESTION

L1

PC

RUT5

LOW ROAD
COST

CON-
GESTION

L2

RUT4

Y

P1 P2

RUT1

X

LEARN AS
CORRECT ANSWER

T

RUT2 RUT3

[DURING LEARNING]

[DURING DELIVERY PLAN GENERATION]

ROAD COST = W1 * DISTANCE INFORMATION +
W2 * RIGHT AND LEFT TURN INFORMATION + ...
+ Wn * AVERAGE SPEED

[FIG. 5]

EP 4 148 009 A1

[FIG. 6A]

|     | S | D1 | D2 | D3 | D4 | D5 | D6 | D7 | D8 |
|-----|---|----|----|----|----|----|----|----|----|
| S   |   | *  | *  | *  | *  | *  | *  | *  | *  |
| D1  | * |    | 10 | 25 | *  | *  | *  | *  | *  |
| D2  | * | *  |    | 10 | *  | *  | *  | 10 | *  |
| D3  | * | *  | *  |    | *  | *  | *  | *  | *  |
| D4  | * | *  | *  | *  |    | *  | *  | *  | *  |
| D5  | * | *  | *  | *  | *  |    | 10 | *  | *  |
| D6  | * | *  | 10 | *  | *  | *  |    | 10 | *  |
| D7  | * | *  | *  | *  | *  | *  | *  |    | *  |
| D8  | * | *  | *  | *  | *  | *  | *  | *  |    |

[FIG. 6B]

|     | S | D1 | D2 | D3 | D4 | D5 | D6 | D7 | D8 |
|-----|---|----|----|----|----|----|----|----|----|
| S   |   | *  | *  | *  | *  | *  | *  | *  | *  |
| D1  | * |    | 10 | 5  | *  | *  | *  | *  | *  |
| D2  | * | *  |    | 10 | *  | *  | *  | 10 | *  |
| D3  | * | *  | *  |    | *  | *  | *  | *  | *  |
| D4  | * | *  | *  | *  |    | *  | *  | *  | *  |
| D5  | * | *  | *  | *  | *  |    | 10 | *  | *  |
| D6  | * | *  | 10 | *  | *  | *  |    | 10 | *  |
| D7  | * | *  | *  | *  | *  | *  | *  |    | *  |
| D8  | * | *  | *  | *  | *  | *  | *  | *  |    |

[FIG. 7]

DELIVERY DESTINATION D3

9→1

R1

BEFORE LEARNING:
DISTANCE 25
AFTER LEARNING:
DELIVERY COST 10

3→1

8→1

8→8

2→1

R2

BEFORE LEARNING:
DISTANCE 30
AFTER LEARNING:
DELIVERY COST 5

8→1

DELIVERY DESTINATION D1

[FIG. 8]

```
                    ┌──────────────────────────────────┐
                    │   START DELIVERY PLAN GENERATION  │
                    └──────────────────────────────────┘
                                     │
                                     ▼
         ┌─────────────────────────────────────────────────┐
         │  ACQUIRE SPECIFIED DELIVERY RANGE INFORMATION    │ ─── S11
         └─────────────────────────────────────────────────┘
                                     │
                                     ▼
         ┌─────────────────────────────────────────────────┐
         │  READ ROAD NW AND DELIVERY-PURPOSE ROAD          │ ─── S12
         │  FEATURE DATA WITHIN DELIVERY RANGE              │
         └─────────────────────────────────────────────────┘
                                     │
                                     ▼
         ┌─────────────────────────────────────────────────┐
         │  ACQUIRE DYNAMIC DATA SUCH AS CONGESTION         │ ─── S13
         │  INFORMATION FOR SCHEDULED DELIVERY TIME WITHIN  │
         │  DELIVERY RANGE                                  │
         └─────────────────────────────────────────────────┘
                                     │
                                     ▼
         ┌─────────────────────────────────────────────────┐
         │  CALCULATE AND STORE ROAD COST BY USING          │ ─── S14
         │  DYNAMIC DATA AND ROAD NW AND DELIVERY-PURPOSE   │
         │  ROAD FEATURE DATA                               │
         └─────────────────────────────────────────────────┘
                                     │
                                     ▼
         ┌─────────────────────────────────────────────────┐
         │  SPECIFY NODES CORRESPONDING TO TWO DELIVERY     │ ─── S15
         │  DESTINATIONS FOR WHICH DELIVERY ROUTE IS TO BE  │
         │  DETERMINED IN ROAD NW                           │
         └─────────────────────────────────────────────────┘
                                     │
                                     ▼
         ┌─────────────────────────────────────────────────┐
         │  CALCULATE DELIVERY ROUTES BETWEEN NODES         │ ─── S16
         │  CORRESPONDING TO TWO DELIVERY DESTINATIONS AND  │
         │  DELIVERY COSTS CORRESPONDING TO DELIVERY ROUTES,│
         │  RESPECTIVELY, BY USING DIJKSTRA'S ALGORITHM     │
         └─────────────────────────────────────────────────┘
                                     │
                                     ▼
        ╟─────────────────────────────────────────────────╢
        ║    CALCULATE DELIVERY PLAN BY USING              ║ ─── S17
        ║    CALCULATED DELIVERY COSTS                     ║
        ╟─────────────────────────────────────────────────╢
                                     │
                                     ▼
                    ┌──────────────────────────────────┐
                    │    END DELIVERY PLAN GENERATION   │
                    └──────────────────────────────────┘
```

[FIG. 9]

```
        ┌──────────────────────────────────────┐
        │   START DELIVERY PLAN CALCULATION    │
        └──────────────────────────────────────┘
                          │
        ┌──────────────────────────────────────┐     S21
        │       DETERMINE INITIAL SOLUTION      │
        └──────────────────────────────────────┘
                          │
          ┌──────────────►│
          │               │
        ┌──────────────────────────────────────┐     S22
        │ PERFORM THREE TYPES OF IMPROVEMENT    │
        │ METHODS IN ORDER FOR ALL COMBINATIONS │
        │ OF DELIVERY DESTINATIONS, BASED ON    │
        │ DELIVERY PLAN WHICH IS SOLUTION AT    │
        │ CURRENT TIME POINT                    │
        └──────────────────────────────────────┘
                          │
                   S23    │
                  ╱───────────────╲        NO
                 ╱     IMPROVED?    ╲──────────────┐
                 ╲                  ╱              │
                  ╲───────────────╱               │
                          │ YES                    │
                          │                        │
        ┌──────────────────────────────────────┐  │  S24
        │   SET IMPROVED SOLUTION AS SOLUTION   │  │
        │         AT CURRENT TIME POINT         │  │
        └──────────────────────────────────────┘  │
          │                                         │
          └─────────────────────────────────────   │
                          ┌─────────────────────────┘
                          ▼
        ┌──────────────────────────────────────┐     S25
        │   OUTPUT SOLUTION AT CURRENT TIME     │
        │    POINT AS FINAL DELIVERY PLAN       │
        └──────────────────────────────────────┘
                          │
        ┌──────────────────────────────────────┐
        │   END DELIVERY PLAN CALCULATION      │
        └──────────────────────────────────────┘
```

[FIG. 10]

[FIG. 11]

[FIG. 12]

AR1

AR2

[DURING LEARNING]

[DURING DELIVERY PLAN GENERATION (UNLEARNED)]

EP 4 148 009 A1

## INTERNATIONAL SEARCH REPORT

| | International application No. |
|---|---|
| | PCT/JP2021/023015 |

**A. CLASSIFICATION OF SUBJECT MATTER**
Int.Cl. B65G61/00(2006.01)i, G08G1/00(2006.01)i, G01C21/34(2006.01)i,
G06Q10/04(2012.01)i, G06Q10/08(2012.01)i, G16Y10/40(2020.01)i,
G16Y40/60(2020.01)i
FI: G06Q10/08300, B65G61/00544, G08G1/00D, G01C21/34, G16Y10/40, G16Y40/60,
G06Q10/04310

According to International Patent Classification (IPC) or to both national classification and IPC

**B. FIELDS SEARCHED**

Minimum documentation searched (classification system followed by classification symbols)
Int.Cl. B65G61/00, G08G1/00, G01C21/34, G06Q10/04, G06Q10/08, G16Y10/40,
G16Y40/60

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-082755 A (PANASONIC INTELLECTUAL PROPERTY MANAGEMENT CO., LTD.) 30 May 2019 (2019-05-30), entire text, all drawings | 1-7 |
| A | JP 9-311895 A (RICOH CO., LTD.) 02 December 1997 (1997-12-02), entire text, all drawings | 1-7 |
| A | JP 2006-078307 A (YAZAKI CORPORATION) 23 March 2006 (2006-03-23), entire text, all drawings | 1-7 |
| A | JP 2013-211007 A (FUJIFILM RI PHARMA CO., LTD.) 10 October 2013 (2013-10-10), entire text, all drawings | 1-7 |

☐ Further documents are listed in the continuation of Box C. ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 September 2021 | 14 September 2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

<table>
<tr><td colspan="2" align="center"><strong>INTERNATIONAL SEARCH REPORT</strong><br>Information on patent family members</td><td>International application No.<br>PCT/JP2021/023015</td></tr>
</table>

| | | |
|---|---|---|
| JP 2019-082755 A | 30 May 2019 | US 2020/0249040 A1<br>WO 2019/082720 A1<br>EP 3686817 A1<br>CN 111263947 A |
| JP 9-311895 A | 02 December 1997 | (Family: none) |
| JP 2006-078307 A | 23 March 2006 | (Family: none) |
| JP 2013-211007 A | 10 October 2013 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005127942 A